# EUROPÄISCHE PATENTSCHRIFT

(11) **EP 1 213 906 B1**
(45) Veröffentlichungstag und Bekanntmachung des Hinweises auf die Patenterteilung: **02.11.2005**
(21) Anmeldenummer: 01123343.4
(22) Anmeldetag: 09.10.2001
(51) Int. Cl.: H04M 15/00, H04Q 3/00

(54) **Verfahren und Kommunikationssystem zum Übertragen von Tarif- und/oder Entgeltinformationen über ein digitales Netz**
Method and communication system for transmitting billing and/or payment informations over a digital network
Méthode et système de communication pour la transmission d'informations de facturation etou de payement sur un réseau numérique

(30) Priorität: 07.12.2000 DE 10060741
(43) Veröffentlichungstag der Anmeldung: 12.06.2002
(73) Patentinhaber: Deutsche Telekom AG, 53113 Bonn (DE)
(72) Erfinder: Häussler, Rolf, 64331 Weiterstadt (DE)

(56) Entgegenhaltungen:
- WO-A-00/18104
- WO-A-00/21267

## Beschreibung

Die Erfindung betrifft Verfahren zum Übertragen von Tarif- und/oder Entgeltinformationen über ein digitales Netz, welche wenigstens teilweise von einem gerufenen Teilnehmer bestimmt werden können, sowie Kommunikationssysteme zur Übertragung von Tarif- und/oder Entgeltinformationen über ein solches digitales Netz

An ein solches Digitalnetz sind häufig auch Dienstanbieter von Telekommunikationsdienstleistungen angeschaltet. Beispielsweise werden solche Dienstanbieter an das ISDN der Deutschen Telekom AG über den sogenannten Anschluss für Telekommunikationsdienstanbieter (AfTD) angebunden.

Eine wichtige und komplexe Aufgabe digitaler Netze ist die Übermittlung und Auswertung von Tarif- und/oder Entgeltinformationen. Der Begriff "Tarifierung" bedeutet in diesem Zusammenhang, dass die tarifierende Instanz des digitalen Netzes z.B. Kommunikationsdatensätze erstellen muss, auf deren Basis dann die Abrechnung mit dem Anrufer erfolgt. Der Begriff "Tarifinformation" wird nachfolgend im Zusammenhang mit der Tarifierung einer Verbindung verwendet. Weiterhin kann die tarifierende Instanz Entgeltinformation bestimmen, die zur Anzeige am Endgerät des Anrufers genutzt werden kann. Der Begriff "Entgeltinformation" wird nachfolgend im Zusammenhang mit dem am Endgerät eines Anrufers anzuzeigenden Entgelt für eine Verbindung verwendet. Im Idealfall stimmt die am Endgerät des Anrufers angezeigte Entgeltinformation mit der tatsächlichen Tarifierung überein. Technisch betrachtet können Tarifinformation und Entgeltinformation unabhängig voneinander behandelt werden. Im ISDN der Telekom AG ist dies jedoch im Augenblick nicht der Fall.

Die Tarifierung der Verbindung zwischen einem rufenden Teilnehmer und einem gerufenen Teilnehmer kann nicht nur vom Netzbetreiber eines Netzes, an das der rufende Teilnehmer angebunden ist (TNB-A), sondern beispielsweise auch vom Netzbetreiber eines Netzes, an das der gerufene Teilnehmer angeschaltet ist, oder in bestimmten Fällen auch vom gerufenen Teilnehmer selbst bestimmt werden - siehe hierzu z.B. die vom Unter-Arbeitskreis Billing erarbeitete und vom Arbeitskreis für technische und betriebliche Fragen der Numerierung und Netzzusammenschaltung (AK NN) herausgegebene Schnittstellen-Spezifikation "Entgeltinformation für Endkunden über Netzgrenzen", Stufe 1 "AOC'99", Version 2.0.0. vom 11.02.2000 und die Dokumentation "Abrechnungsverfahren zwischen Netzbetreibern, Netzbetreibern und Endkunden sowie Netzbetreibern und Diensteanbietern; Entgeltinformation über Netzgrenzen"; Version 0.7.0, 30.07.1998, ebenfalls erarbeitet vom Unter-Arbeitskreis Billing und herausgegeben vom Arbeitskreis für technische und betriebliche Fragen zur Numerierung und Netzzusammenschaltung.

Aus der WO 00/18104 A1 ist ein Verfahren und ein System zur Übertragung von Telekommunikationsverbindungskosten zu einem Kommunikationsendgerät bekannt. Als Nachteil bestehender Systeme wird angesehen, dass Verbindungskosteninformationen kontinuierlich zum Endgerät übertragen werden müssen, wenn der Teilnehmer Echtzeitinformationen wünscht. Um dieses Problem zu lösen, werden verbindungsspezifische AOC(Advice-Of-Charge)-Daten zum Kommunikationsendgerät zu Beginn einer Kommunikation übertragen. Aus den AOC-Daten berechnet das Kommunikationsendgerät die Verbindungskosten. Auf diese Weise lassen sich die Echtzeitkosten einer Kommunikationsvebrindung berechnen und am Kommunikationsendgerät darstellen. Die WO 00/18104 A1 beschäftigt sich nicht mit der Thematik, Tarif- und/oder Endgeltinformationen zu übertragen, welche wenigstens teilweise von einem gerufenen Teilnehmer bestimmt werden.

Beim heutigen Stand der Technik in Deutschland kann die Bestimmung der Entgeltinformation dadurch erfolgen, dass der gerufene Teilnehmer die für das Endgerät des Anrufers bestimmte Entgeltinformation beispielsweise in eine entsprechende Nachricht des Zeichengabesystems Nr.7 einschreibt und rückwärts ins Netz zur Weiterverarbeitung sendet. Diese im Rahmen des Leistungsmerkmals "AOC'99" angewandte technische Möglichkeit basiert auf dem sogenannten "ISUP-Charging". Das "ISUP-Charging" ist z.B. beschrieben im Dokument ETSI SPS1 ES 201 296 V1.1.2 (1998-09) Integrated Services Digital Network (ISDN); Signalling System No.7; ISDN User Part (ISUP), Signalling aspects of charging.

Ein auf dem "ISUP-Charging" basierendes Verfahren kann zum Übermitteln von Entgelt- und/oder Tarifinformation genutzt werden. Allerdings muß hierbei das technische System eines Angerufenen immer über das Zeichengabesystem Nr.7 mit ISDN User Part (ISUP) an das Netz des Netzbetreibers angebunden sein, um Entgelt- und/oder Tarifinformation zum Netz des Netzbetreibers übermitteln zu können.

Ist das technische System des Angerufenen beispielsweise über das D-Kanalprotokoll DSS1 (Digital Subscriber Signalling System No.1) an das digitale Netz angebunden, können Entgelt- und/oder Tarifinformationen nicht individuell vom gerufenen Teilnehmer bestimmt und an das digitale Netz zur Weiterverarbeitung gesendet werden. In diesen Anwendungsfällen kann daher vom gerufenen Teilnehmer nicht auf die beim ISUP-Charging vorgesehene Übertragung von Entgelt- und/oder Tarifinformationen zurückgegriffen werden.

Der Erfindung liegt daher die Aufgabe zugrunde, ein Verfahren und ein Kommunikationssystem bereitzustellen, mit dem ein gerufener Teilnehmer flexibel individuelle Tarif-und/oder Entgeltinformationen zu einem digitalen Netz, an das der gerufene Teilnehmer angeschlossen ist, übertragen kann. Flexibel heißt hier, dass der Angerufene die Entgelt-und/oder Tarifinformation beispielsweise in Abhängigkeit von der durchgeführter Aktion, von dem rufenden Teilnehmer, von Datum/Uhrzeit während eines Verbindungsaufbaus oder während einer bestehenden Verbindung bestimmen kann.

In der Beschreibung und in den Ansprüchen wird der Begriff "digitales Netz" sowohl für ein einzelnes Netz, zum Beispiel das ISDN, als auch für die Zusammenschaltung mehrerer digitaler Netze, z. B. mehrere Dienste-integrierende Festnetze, verwendet.

Ein Kerngedanke der Erfindung ist darin zu sehen, dass ein gerufener Teilnehmer nicht wie beim Leistungsmerkmal "AOC'99" über das Zeichengabesystem Nr.7 an das Digitalnetz des jeweiligen Netzbetreibers angebunden sein muss, um individuelle Entgelt- und/oder Tarifinformationen zum digitalen Netz übertragen zu können.

Die Erfindung ist auch nicht auf Dienstanbieter beschränkt, welche über AfTD an das digitale Netz angeschlossen sind. Die Erfindung kann im Prinzip bei beliebigen gerufenen Teilnehmern, die an beliebige Digitalnetze angeschaltet sind, eingesetzt werden, sofern die Teilnehmer selbst die Erzeugung und Übertragung von individuellen Tarif- und/oder Entgelt-Anforderungen veranlassen und im digitalen Netz Entgelt- und/oder Tarifinformationen übertragen werden können.

Tarif- und/oder Entgeltinformationen werden beispielsweise im ISDN der Telekom AG derzeit mittels sogenannter Charge-Band-Nummern (CBN) übertragen. Eine solche CBN besteht aus einer 8-bit-codierten Nummer, mit der die jeweilige Tarif- und/oder Entgeltinformation nur codiert wird. In der Praxis können damit 254 Tarif- und/oder Entgeltinformationen frei codiert werden.

An dieser Stelle sei betont, dass die Erfindung insbesondere die Übertragung von Tarif- und/oder Entgeltinformationen zwischen einem gerufenen Teilnehmer und dem digitalen Netz, an das der gerufene Teilnehmer angeschaltet ist, betrifft, wohingegen die Übertragung, Auswertung und Verarbeitung von Tarif- und/oder Entgeltinformationen im digitalen Netz an sich bekannt ist.

Die Erfindung löst das technische Problem zum einen durch die Verfahrensschritte des Anspruchs 1.

Gemäß diesem Verfahren werden Tarif- und/oder Entgeltinformationen über ein digitales Netz übertragen, wobei die Tarif- und/oder Entgeltinformationen für die Verbindung zwischen einem rufenden und einem gerufenen Teilnehmer wenigstens teilweise vom gerufenen Teilnehmer bestimmt werden können. Zunächst wird eine Verbindung zwischen einem rufenden Teilnehmer und einem gerufenen Teilnehmer, die an das digitale Netz angeschaltet sind, aufgebaut. Bereits an dieser Stelle sei erwähnt, dass es sich bei dem gerufenen Teilnehmer um ein Call Center, eine Telekommunikationsanlage, ein ISDN-Endgerät oder sogar ein eigenes Netz handeln kann. Ein wesentliches Merkmal der Erfindung ist darin zu sehen, dass es keine Rolle spielt, ob die Teilnehmer mittels des D-Kanalprotokolls DSS1 oder mittels des Zeichengabesystems Nr. 7 an das digitale Netz angeschaltet sind.

Während des Verbindungsaufbaus und/oder während einer bestehenden Verbindung kann dann eine vom gerufenen Teilnehmer bestimmte Tarif- und/oder Entgelt-Anforderung erzeugt werden, in die eine individuelle Tarif- und/oder Entgeltinformation, beispielsweise in Form einer CBN, eingebunden wird. Anschließend wird die Tarif- und/oder Entgelt-Anforderung in eine UUS (User-to-User)- Information eingebettet, die zu einer dem digitalen Netz zugeordneten Empfangs- und Auswerteeinrichtung übertragen wird. Durch die Verwendung einer UDS-Information ist es nunmehr möglich, ungeachtet der Anschlusstechnik vom gerufenen Teilnehmer bestimmte Tarif- und/oder Entgeltinformationen zum digitalen Netz zu übertragen, um so unmittelbar Einfluss auf die Tarifierung der Verbindung bzw. auf die am Endgerät des rufenden Teilnehmers anzuzeigenden Entgeltinformationen zu nehmen.

Die in der UUS-Information enthaltene Tarif- und/oder Entgelt-Anforderung wird dann ausgewertet. Entsprechend der in der Tarif- und/oder Entgelt-Anforderung enthaltenen individuellen Tarif- und/oder Entgeltinformation wird die Verbindung zwischen dem rufenden und dem gerufenen Teilnehmer tarifiert und/oder die Entgeltinformation zum rufenden Teilnehmer übertragen.

Zweckmäßigerweise wird für die in der Empfangs- und Auswerteeinrichtung empfangene Tarif- und/oder Entgelt-Anforderung ein Format gewählt, welches vom digitalen Netz unmittelbar verarbeitet werden kann. Andernfalls muss die Empfangs- und Auswerteeinrichtung in der Lage sein, das Format in ein von dem digitalen Netz verarbeitbares Format umwandeln zu können. Da beispielsweise die Tarif- und/oder Entgeltinformation, welche im ISDN der Deutschen Telekom AG generiert wird, innerhalb des ISDN der Deutschen Telekom AG derzeit mittels sogenannter Charge-Band-Nummern (CBN; Charge Band Numbers) übermittelt wird, ist es zweckmäßig, die Tarif-und/oder Entgeltinformationen in der Tarif- und/oder Entgelt-Anforderung als CBN zu übertragen.

Sofern es sich bei dem gerufenen Teilnehmer beispielsweise um ein Call Center handelt, wird eine Verbindung zwischen rufendem Teilnehmer und dem Call Center häufig mit Hilfe eines dem digitalen Netz zugeordneten intelligenten Netzes aufgebaut. In diesem Fall kann die in der UUS-Information enthaltene Tarif- und/oder Entgelt-Anforderung beispielsweise vom Call Center selbst erzeugt und im intelligenten Netz ausgewertet werden. Diese Auswertung kann in einem sogenannten Dienststeuerungspunkt (SCP; Service Control Point) in Verbindung mit einer Dienst-vermittelnden Funktion (SSF; Service Switching Function) erfolgen, welche beispielsweise in einer Weitverkehrsvermittlungsstelle des digitalen Netzes implementiert sein kann.

Um beispielsweise eine Tarifierung während einer bestehenden Verbindung durch den gerufenen Teilnehmer ändern zu können, erzeugt zunächst der gerufene Teilnehmer eine Auslöseinformation. Die Tarif- und/oder Entgelt-Anforderung wird dann in einer in der Auslöseinformation enthaltenen UUS-Information zur Empfangs- und Auswerteeinrichtung des digitalen Netzes übertragen. Nach dem Auslösen der Verbindung wird erneut eine Verbindung zum gerufenen Teilnehmer aufgebaut.

Um beispielsweise bei einem Tarifwechsel während einer bestehenden Verbindung dem rufenden Teilnehmer die Möglichkeit zu geben, den neuen Tarif anzunehmen oder abzulehnen, wird der rufende Teilnehmer vor dem erneuten Aufbau der Verbindung zum gerufenen Teilnehmer mit einer Ansage- und/oder Dialogeinrichtung verbunden. Nach dem Ende der Ansage oder des Dialoges wird die Verbindung zwischen der Ansage- und/oder Dialogeinrichtung und dem rufenden Teilnehmer wieder getrennt.

Alternativ kann ein Tarifierungswechsel während einer bestehenden Verbindung auch dadurch vorgenommen werden, dass die Tarif- und/oder Entgelt-Anforderung in einer UUS-Information gemäß dem ISDN-Dienstemerkmal UUS3 übertragen wird. Die Verbindung kann dann bestehen bleiben, ohne dass sie zunächst ausgelöst und anschließend erneut zum gerufenen Teilnehmer aufgebaut werden muss.

Bekannt ist im ISDN der Deutschen Telekom unter anderem, dass der gerufene Teilnehmer, beispielsweise ein Call Center, die Verbindung mit einem rufenden Teilnehmer zu einem anderen Teilnehmer weiter vermitteln kann. Hierzu erzeugt zunächst der gerufene Teilnehmer eine Auslöseinformation. Hierbei wird die Adresse des anderen Teilnehmers, der mit dem rufenden Teilnehmer verbunden werden soll, sowie erfindungsgemäß die dazugehörende neue Tarif- und/oder Entgelt-Anforderung in einer in der Auslöseinformation enthaltenen UUS-Information zur Empfangs- und Auswerteeinrichtung des digitalen Netzes übertragen. Nach dem Auslösen der Verbindung zum gerufenen Teilnehmer wird eine Verbindung zum anderen Teilnehmer aufgebaut. Entsprechend der in der neuen Tarif- und/oder Entgelt-Anforderung enthaltenen individuellen Tarif- und/oder Entgeltinformation wird die Verbindung zwischen dem rufenden und dem anderen Teilnehmer tarifiert und/oder die entsprechende Entgeltinformation zum rufenden Teilnehmer übertragen. Um auch in diesem Fall dem rufenden Teilnehmer beispielsweise die Möglichkeit zu geben, den Tarif zum anderen, weitervermittelten Teilnehmer annehmen oder ablehnen zu können, wird wiederum vor dem erneuten Aufbau der Verbindung zum anderen Teilnehmer der rufende Teilnehmer mit einer Ansage- und/oder Dialogeinrichtung verbunden und anschließend wieder von dieser getrennt.

Das oben genannte technische Problem wird ebenfalls durch die Verfahrensschritte des Anspruchs 9 gelöst.

Zunächst wird eine Verbindung zwischen einem rufenden Teilnehmer und einem gerufenen Teilnehmer, die an ein digitales Netz angeschaltet sind, mittels eines Rufverarbeitungs-Servers, auch Call Processing Server (CPS) genannt, aufgebaut. Der Rufverarbeitungs-Server ist mit einem intelligenten Netz und dem gerufenen Teilnehmer verbunden. Anschließend wird eine vom gerufenen Teilnehmer bestimmte Tarif- und/oder Entgelt-Anforderung erzeugt, in die eine Teilnehmer-bezogene Tarif- und/oder Entgeltinformation eingebunden wird. Die Tarif- und/oder Entgelt-Anforderung wird in eine vorbestimmte Signalisierungs-Nachricht eingebettet, die vom Rufverarbeitungs-Server zu einer dem digitalen Netz zugeordneten Empfangs- und Auswerteeinrichtung übertragen wird. Die in der Signalisierungs-Nachricht enthaltene Tarif- und/oder Entgelt-Anforderung wird nunmehr ausgewertet. In Abhängigkeit von der in der Tarif- und/oder Entgelt-Anforderung enthaltenen individuellen Tarif- und/oder Entgeltinformation wird die Verbindung zwischen dem rufenden und dem gerufenen Teilnehmer tarifiert und/oder die Entgeltinformation zum rufenden Teilnehmer übertragen.

Vorteilhafte Weiterbildungen dieses Verfahrens sind Gegenstand der Unteransprüche.

Die Tarif- und/oder Entgelt-Anforderung kann in dem Rufverarbeitungs-Server selbst erzeugt werden. Die individuelle Tarif- und/oder Entgeltinformation, die in die Tarif- und/oder Entgelt-Anforderung einzubetten ist, ist beispielsweise entweder in einer Tabelle im Rufverarbeitungs-Server abgelegt oder wird bei Bedarf vom gerufenen Teilnehmer selbst zum Rufverarbeitungs-Server übertragen.

Alternativ kann die Tarif- und/oder Entgelt-Anforderung vom gerufenen Teilnehmer selbst erzeugt und zum Rufverarbeitungs-Server übertragen werden. Der Rufverarbeitungs-Server überträgt anschließend die Tarif-und/oder Entgelt-Anforderung in einem besonderen Format zur Empfangs- und Auswerteeinrichtung des digitalen Netzes.

Die Aufgabe wird weiterhin durch die Merkmale des Anspruchs 13 gelöst.

Danach ist ein Kommunikationssystem zur Übertragung von Tarif- und/oder Entgeltinformationen über ein digitales Netz vorgesehen, an das mehrere erste und zweite Teilnehmer angeschaltet sind. Wenigstens einer zweiten Endeinrichtung ist eine Einrichtung zum individuellen Erzeugen einer Tarif-und/oder Entgelt-Anforderung zugeordnet. Die zweiten Endeinrichtungen und/oder die jeweiligen Einrichtungen zum individuellen Erzeugen einer Tarif- und/oder Entgelt-Anforderung sind zum Übermitteln der Tarif- und/oder Entgelt-Anforderung in einer UUS-Information ausgebildet. Ferner ist wenigstens eine dem digitalen Netz zugeordnete Tarif-und/oder Entgeltinformation-bestimmende Einrichtung vorgesehen, der eine Einrichtung zum Empfangen und Auswerten einer in einer UUS-Information übertragenen Tarif- und/oder Entgelt-Anforderung zugeordnet ist. Die Tarif- und/oder Entgeltinformation-bestimmende Einrichtung veranlasst in Abhängigkeit von einer in der individuellen Tarif- und/oder Entgelt-Anforderung enthaltenen Tarif- und/oder Entgeltinformation die Tarifierung der Verbindung zwischen einer ersten Endeinrichtung und einer zweiten Endeinrichtung und/oder die Übertragung der Entgeltinformation zur ersten Endeinrichtung.

Vorteilhafte Weiterbildungen sind in den Unteransprüchen beschrieben.

In an sich bekannter Weise kann die Tarif- und/oder Entgeltinformation-bestimmende Einrichtung in einer Vermittlungsstelle, einer zentralen Einrichtung des digitalen Netzes implementiert oder eine Einrichtung eines intelligenten Netzes sein.

Um auch während einer bestehenden Verbindung einen Tarifwechsel durchführen zu können, ist die Einrichtung zum individuellen Erzeugen einer Tarif- und/oder Entgelt-Anforderung zum Einbinden einer Tarif- und/oder Entgeltinformation in eine Auslöseinformation ausgebildet, die die ihr zugeordnete zweite Endeinrichtung erzeugt. Das digitale Netz kann dann unter Ansprechen auf eine empfangene Auslöseinformation automatisch die zuvor ausgelöste Verbindung zur Verbindungs-auslösenden zweiten Endeinrichtung wieder aufbauen.

Die oben genannte Aufgabe wird ferner durch die Merkmale des Anspruchs 16 gelöst.

Danach wird ein Kommunikationssystem zur Übertragung von individuell festlegbaren Tarif- und/oder Entgeltinformationen über ein digitales Netz mit ersten und zweiten Endeinrichtungen geschaffen, wobei wenigstens ein Rufverarbeitungs-Server zum Verbinden wenigstens einer zweiten Endeinrichtung mit einem intelligenten Netz implementiert ist. Ferner ist eine Einrichtung zum Erzeugen einer eine Tarif- und/oder Entgeltinformation enthaltende Tarif- und/oder Entgelt-Anforderung vorgesehen, die von einer dazugehörenden zweiten Endeinrichtung festlegbar ist. Der Rufverarbeitungs-Server dient zum Übermitteln der Tarif-und/oder Entgelt-Anforderung in einem vorbestimmten Format zu wenigstens einer dem intelligenten Netz zugeordneten Tarif-und/oder Entgeltinformation-bestimmenden Einrichtung, der eine Einrichtung zum Empfangen und Auswerten einer Tarif-und/oder Entgelt-Anforderung zugeordnet ist. Die Tarif-und/oder Entgeltinformation-bestimmende Einrichtung kann in Abhängigkeit von einer in der individuellen Tarif- und/oder Entgelt-Anforderung enthaltenen Tarif- und/oder Entgeltinformation die Tarifierung der Verbindung zwischen einer ersten und einer zweiten Endeinrichtung und/oder die Übertragung der Entgeltinformation zur ersten Endeinrichtung veranlassen.

Vorteilhafte Weiterbildungen sind in den Unteransprüchen umschrieben.

So kann die Einrichtung zum Erzeugen einer eine Tarif-und/oder Entgeltinformation enthaltende Tarif- und/oder Entgelt-Anforderung dem Rufverarbeitungs-Server zugeordnet sein. Zweckmäßigerweise weist der Rufverarbeitungs-Server einen Speicher zum Ablegen von Tarif- und/oder Entgeltinformationen einer oder mehrerer zweiter Endeinrichtung(en) auf. Die jeweiligen individuellen Tarif-und/oder Entgeltinformationen können im Speicher aktualisiert werden.

Sind die zweiten Endeinrichtungen nicht in der Lage, bepreiste oder unbepreiste Kommunikationsdatensätze zu Verbindungen zu erzeugen, kann dem Rufverarbeitungs-Server eine Einrichtung zum Generieren von bepreisten und/oder unbepreisten Kommunikationsdatensätzen zugeordnet sein.

Da digitale Netze Tarif- und/oder Entgeltinformationen in einem bestimmten Format übertragen und verarbeiten, ist dafür zu sorgen, dass am Ausgang der Empfangs- und Auswerteeinrichtung ein entsprechendes Format vorliegt. Liegen eingangsseitig an der Empfangs- und Auswerteeinrichtung Formate an, die nicht mit dem Format des Netzes übereinstimmen, ist eine Einrichtung zum Umsetzen eines nicht Netz-konformen Formats einer in der Tarif-und/oder Entgelt-Anforderung empfangenen Tarif- und/oder Entgeltinformation in ein vom digitalen Netz verarbeitbares Format zu implementieren.

Die Erfindung wird nachstehend anhand zahlreicher Ausführungsbeispiele in Verbindung mit den beiliegenden Zeichnungen näher erläutert.
Darin zeigen:
- Fig. 1: ein vereinfachtes Blockschaltbild eines ausschnittsweise dargestellten Kommunikationsnetzes, welches ein digitales Netz, daran angeschaltete Teilnehmer sowie ein intelligentes Netz umfasst,
- Fig. 2: eine alternative Ausführungsform des in Fig. 1 gezeigten Kommunikationssystems, welches zusätzlich einen Rufverarbeitungs-Server zwischen einem gerufenen Teilnehmer und dem intelligenten Netz aufweist.

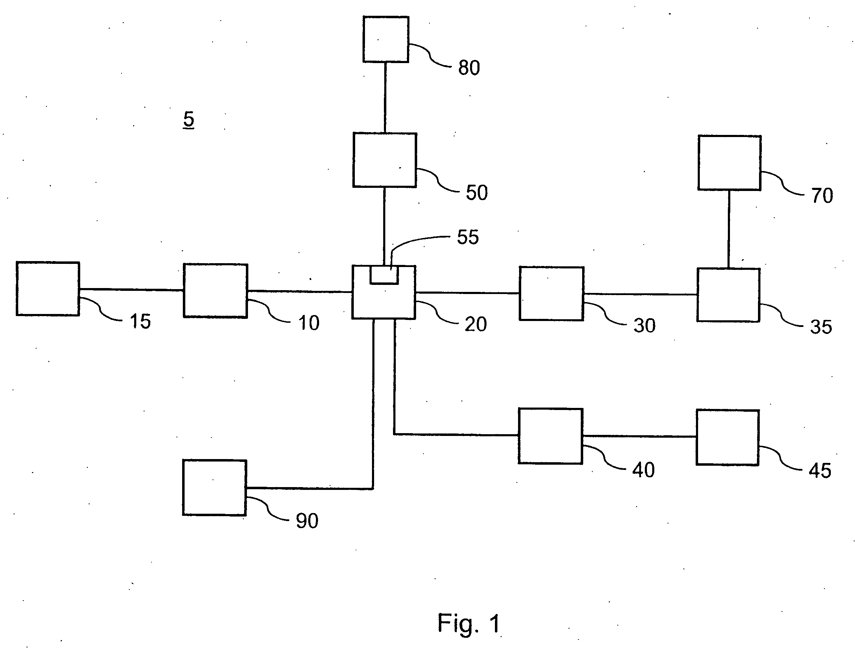

Fig. 1 zeigt ausschnittsweise ein allgemein mit 5 bezeichnetes Kommunikationssystem, welches ein digitales Netz und ein intelligentes Netz umfasst. Das digitale Netz, beispielsweise das ISDN, welches nur ausschnittsweise dargestellt ist, weist eine Teilnehmer-Vermittlungsstelle 10, eine Weitverkehrsvermittlungsstelle 20, eine Netzübergangs-Vermittlungsstelle 30 sowie eine zweite Teilnehmer-Vermittlungsstelle 40 auf. An die Teilnehmer-Vermittlungsstelle 10 ist, beispielsweise mittels des D-Kanalprotokolls DSS1, ein Endgerät 15 angeschlossen, welches nachfolgend auch als rufender Teilnehmer bezeichnet wird. An die zweite Teilnehmer-Vermittlungsstelle 40 ist, beispielsweise über das D-Kanalprotokoll DSS1, ein weiteres Endgerät 45 angeschaltet, wohingegen an die Netzübergangs-Vermittlungsstelle 30 beispielsweise ein Call Center 35 über das Zeichengabesystem Nr. 7 angeschaltet ist. Das Call Center 35 wird nachfolgend auch als gerufener Teilnehmer bezeichnet. Sofern das Call Center 35 über das D-Kanalprotokoll DSS1 an das digitale Netz angeschaltet wird, ist anstelle der Netzübergangs-Vermittlungsstelle 30 eine Teilnehmer-Vermittlungsstelle 30 vorzusehen.

Das ebenfalls nur ausschnittsweise dargestellte intelligente Netz umfasst einen sogenannten Service Control Point (SCP) 50 und eine in der Weitverkehrsvermittlungsstelle 20 implementierte Service Switching Function SSF, die mit 55 gekennzeichnet ist. Tarif- und/oder Entgeltinformations-bestimmende Komponenten können beispielsweise im Service Control Point 50 in Zusammenwirkung mit der in der Weitverkehrsvermittlungsstelle implementierten Service Switching Function des intelligenten Netzes und/oder in den Teilnehmer-Vermittlungsstellen 10, 40, der Netzübergangs-Vermittlungsstelle 30 oder der Weitverkehrsvermittlungsstelle 20 enthalten sein. Ferner zeigt Fig. 1 eine mit 70 gekennzeichnete Steuereinrichtung, die, wie weiter unten noch näher ausgeführt wird, eine vom gerufenen Teilnehmer 35 festgelegte Tarif- und/oder Entgelt-Anforderung erzeugen kann. Ferner ist eine Empfangs- und Auswerteeinrichtung 80 mit dem Service Control Point 50 des intelligenten Netzes verbunden, die zum Empfang und zur Auswertung einer in einer UUS-Information eingefügten Tarif- und/oder Entgelt-Anforderung ausgebildet ist. In diesem Fall fungiert der Service Control Point 50 auch als Tarif- und/oder Entgeltbestimmende Komponente des Kommunikationssystems 5. An dieser Stelle sei erwähnt, dass Fig. 1 lediglich eine beispielhafte Ausführungsform ist. Mit anderen Worten kann die Steuereinrichtung 70 auch als Software-Lösung direkt im Call Center 35 implementiert sein. Auch die Empfangs- und Auswerteeinrichtung 80 kann direkt im Service Control Point 50, in einer oder in allen Vermittlungsstellen 10, 20, 30 und 40 implementiert sein, die in diesem Fall dann zur Bestimmung der Tarif- und/oder Entgeltinformation geeignet sind. Außerdem ist in Fig. 1 eine mit 90 bezeichnete Ansage-und/oder Dialogeinrichtung vorgesehen, die beispielsweise mit der Weitverkehrsvermittlungsstelle 20 verbunden werden kann.

An dieser Stelle sei noch erwähnt, dass eine Signalisierung zwischen den Vermittlungsstellen 10, 20, 30 und 40 sowie zwischen der Weitverkehrsvermittlungsstelle 20 und dem Service Control Point 50 des intelligenten Netzes über Zeichengabekanäle des Zeichengabesystems Nr. 7 erfolgt.

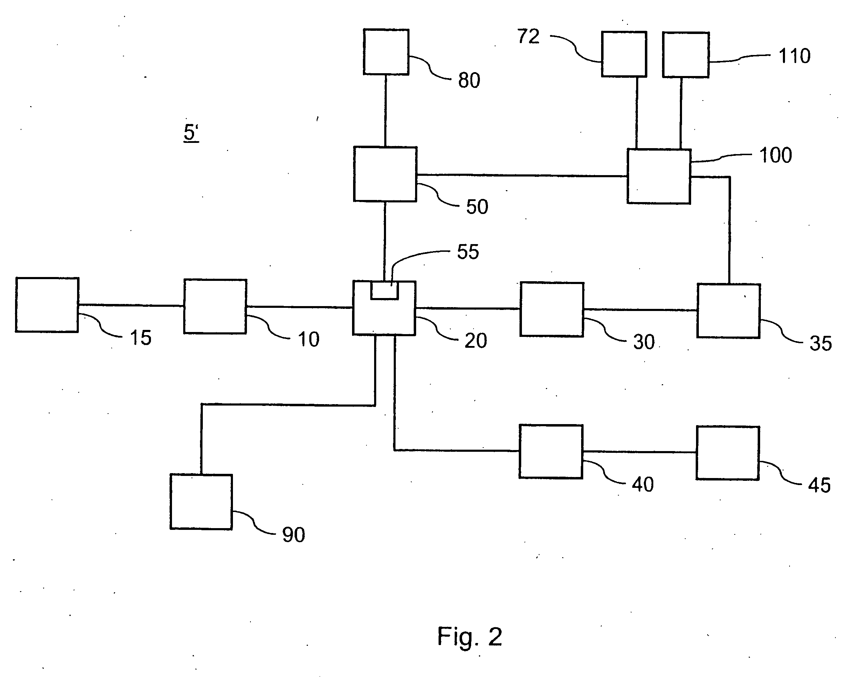

Fig. 2 zeigt ein Kommunikationssystem 5', welches ähnlich dem Kommunikationssystem 5 aufgebaut ist. Daher sind gleiche Komponenten in beiden Figuren mit gleichen Bezugszeichen versehen.

Ein Rufverarbeitungs-Server 100 ist mit dem Call Center 35 und dem Service Control Point 50 des digitalen Netzes verbunden. Ein weiterer Unterschied zu dem Kommunikationssystem nach Fig. 1 besteht darin, dass die Steuerschaltung 70 nunmehr dem Rufverarbeitungs-Server 100 zugeordnet und mit dem Bezugszeichen 72 versehen ist. Dem Rufverarbeitungs-Server 100 kann eine weitere Steuerschaltung 110 zugeordnet sein, die z.B. dazu dient, dem Betreiber des Call Centers 35 bepreiste oder unbepreiste Kömmunikationsdatensätze zu bestimmten Verbindungen zur Verfügung zu stellen, wenn das Call Center 35 hierzu nicht selbst in der Lage ist.

Nachfolgend wird kurz erläutert, wie in an sich bekannter Weise Tarif- und/oder Entgeltinformationen mit Hilfe des digitalen Netzes und des intelligenten Netzes übertragen und bestimmt werden können. Hierzu nehmen wir zunächst auf Fig. 1 Bezug.

Zunächst sei angenommen, dass eine Verbindung zwischen dem rufenden Teilnehmer 15 und beispielsweise dem Teilnehmer 45 besteht. Die Bestimmung der Tarifierung der Verbindung zwischen den beiden Teilnehmern 15 und 45 und/oder der zum rufenden Teilnehmer 15 zu übermittelnden Entgeltinformation kann im ISDN zum Beispiel vom SCP 50 vorgenommen werden. Der SCP 50 sendet dann eine entsprechende Nachricht über das Intelligent Network Application Protocol (INAP) an die in der Weitverkehrsvermittlungstelle 20 implementierte Service Switching Function (SSF) 55. Diese Nachricht enthält eine CBN (charge band number), die die Tarif- und/oder Entgeltinformation codiert. Die SSF 55 sendet anschließend eine Nachricht über den ISDN User Part (ISUP) an die Teilnehmer-Vermittlungsstelle 10. Diese ISUP-Nachricht enthält ebenfalls die CBN. Die Bestimmung der Tarifierung der Verbindung zwischen den Teilnehmern 15 und 45 und der dem rufenden Teilnehmer 15 zu übermittelnden Entgeltinformation kann im ISDN aber zum Beispiel auch von der Teilnehmer-Vermittlungsstelle 10 selbst vorgenommen werden.

Bei der vorliegenden Verbindung sind der rufende Teilnehmer 15 und der gerufene Teilnehmer 45 an dasselbe digitale Netz angeschaltet. In diesem Fall wird die Entgeltinformation bei analogen Anschlüssen über 16kHz-Impulse und bei digitalen Anschlüssen über das DSS1-Protokoll in Richtung zum rufenden Teilnehmer 15 übertragen. Bei DSS1-Anschlüssen wird zur Übertragung der Entgeltinformation das ISDN-Dienstemerkmal "AOC" (Advice of Charge) genutzt.

Sind hingegen der rufende und gerufene Teilnehmer an verschiedenen Netzen angeschlossen und wird z.B. das Leistungsmerkmal "AOC'99" unterstützt, dann generiert beispielsweise eine Vermittlungseinheit für Netzübergänge (VE:N) aufgrund der von der SSF 55 in einer ISUP-Nachricht erhaltenen CBN gemäß dem Leistungsmerkmal AOC'99 eine entsprechende ISUP-Nachricht mit darin enthaltener Entgeltinformation und sendet diese ISUP-Nachricht in das fremde Netz. So kann im Falle einer Netzzusammenschaltung Entgeltinformation vom ISDN der Telekom an ein fremdes Netz übermittelt werden.

Nachfolgend werden verschiedene Szenarien beschrieben, in denen der gerufene Teilnehmer 15 die Tarifierung der Verbindung zum rufenden Teilnehmer 15 sowie die für den rufenden Teilnehmer bestimmte Entgeltinformation flexibel und individuell zumindest mit bestimmen kann.

### I. Bestimmung der Entgeltinformation und/oder Tarifinformation durch das Call Center 35 während einer bestehenden Verbindung unter Zuhilfenahme des Rufverarbeitungs-Servers 100

In den nachfolgenden Beispielen wird ein Verfahren beschrieben, mit dem ein Angerufener selbst die Tarifierung und die beim rufenden Teilnehmer 15 anzuzeigende Entgeltinformation während einer Verbindung bestimmen und an das Digitalnetz senden kann, so dass das Digitalnetz dann die weitere Übermittlung der Entgeltinformation in Richtung zum Anrufer vornehmen kann. Das Digitalnetz wird die Übermittlung der Entgeltinformation dann im allgemeinen mittels der beim Leistungsmerkmal "AOC'99" vorgesehenen Verfahren durchführen.

Hierzu muss zunächst, wie noch näher erläutert wird, eine Tarif- und/oder Entgeltinformations-Anforderung vom gerufenen Teilnehmer 35 erzeugt werden. In die Tarif-und/oder Entgeltinformations-Anforderung wird eine Tarif-und/oder Entgeltinformation eingeschrieben, die der Tarif-und/oder Entgeltinformation entspricht, die innerhalb des digitalen Netzes des Netzbetreibers benutzt wird. Wenn die Tarif- und/oder Entgeltinformation nicht der innerhalb des Digitalnetzes benutzten Tarif- und/oder Entgeltinformation entspricht, muss die gesendete Tarif- und/oder Entgeltinformation zum Beispiel in der Empfangs- und Auswerteeinrichtung 80 in ein vom Digitalnetz verarbeitbares Format umgesetzt werden. Ist der gerufene Teilnehmer 45 an das ISDN der Deutschen Telekom AG angeschaltet, so sollte die in der Tarif- und/oder Entgeltinformations-Anforderung enthaltene Tarif- und/oder Entgeltinformation derzeit möglichst eine Charge-Band-Nummer (CBN) sein.

Die erzeugte Tarif- und/oder Entgeltinformations-Anforderung wird nun während der Verbindung von dem Rufverarbeitungs-Server 100 zum Digitalnetz des Netzbetreibers übermittelt. Dies kann wie folgt geschehen:

Zunächst wird in an sich bekannter Weise eine Verbindung zwischen dem rufenden Teilnehmer 15 und dem Call Center 35 mit Unterstützung des Rufverarbeitungs-Servers 100, wie in Fig. 2 dargestellt, aufgebaut. Der Rufverarbeitungs-Server 100 ist ein marktübliches Produkt und wird z.B. als "Call Processing Server" bezeichnet.

Wie bereits erwähnt, ist dem Rufverarbeitungs-Server 100 die Steuerschaltung 72 zugeordnet. Diese Steuerschaltung 72 kann eine durch den gerufenen Teilnehmer 35 festgelegte Tarif- und/oder Entgeltinformations-Anforderung erzeugen und in einer vorbestimmten Signalisierungs-Nachricht an das digitale Netz zur üblichen Weiterverarbeitung senden.

Dementsprechend ist beispielsweise dem SCP 50 als Tarif-und/oder Entgeltinformations-bestimmende Komponente die Empfangs- und Auswerteeinrichtung 80 zugeordnet, welche zum Empfang und zum Auswerten einer in einer vorbestimmten Signalisierungs-Nachricht enthaltenen Tarif- und/oder Entgeltinformations-Anforderung dient. Selbstverständlich sind in dem digitalen Netz neben dem SCP 50 weitere Tarif-und/oder Entgeltinformations-bestimmende Einrichtungen und Empfangs- und Auswerteeinrichtungen implementiert. Die Empfangs- und Auswerteeinrichtung 80 des SCP 50 veranlasst zum einen, dass die aus der Tarif- und/oder Entgeltinformations-Anforderung gewonnene Entgeltinformation in Richtung zum rufenden Teilnehmer 15 so übermittelt wird, wie vom Angerufenen gewünscht. Zum anderen sorgt die Empfangs- und Auswerteeinrichtung 80 dafür, dass die Tarifierung der Verbindung zwischen den Teilnehmern 15 und 35 wie vom Call Center 35 gewünscht durchgeführt wird. Dazu werden in an sich bekannter Weise zum Beispiel in der Teilnehmer-Vermittlungsstelle 10 und/oder in der Weitverkehrsvermittlungsstelle 20 entsprechende Kommunikationsdatensätze gebildet, die der Tarifierung dienen.

Die in der Tarif- und/oder Entgeltinformations-Anforderung enthaltene Tarif- und/oder Entgeltinformation ist entweder bereits in dem Rufverarbeitungs-Server 100 vorhanden (z.B. durch entsprechende Tabelleneinträge) oder sie wird ihm erst bei der Verbindung vom Call Center 35 mitgeteilt.

Bei einem konkreten Ausführungsbeispiel, z.B. im Zusammenhang mit dem ISDN der Deutschen Telekom AG, sind nun folgende Abläufe möglich:

Es besteht bereits eine Verbindung zwischen dem rufenden Teilnehmer 15 und dem Call Center 35. Nun möchte der gerufene Teilnehmer 35 einen Tarifwechsel während der bestehenden Verbindung veranlassen und die hierbei dem rufenden Teilnehmer 15 zu übermittelnde Entgeltinformation und/oder den zu ändernden Tarif bestimmen.

Während der bestehenden Verbindung generiert hierzu die Steuerschaltung 72 des Rufverarbeitungs-Servers 100 eine Tarif- und/oder Entgeltinformations-Anforderung mit einer darin enthaltenen Tarif- und/oder Entgeltinformation, die durch eine CBN codiert ist. Anschließend wird die Tarif-und/oder Entgeltinformation an den Rufverarbeitungs-Server 100 übermittelt, der diese dann in eine Signalisierungs-Nachricht einbettet und an den SCP 50 des dem digitalen Netzes zugeordneten intelligenten Netzes sendet. Der SCP 50 empfängt die Tarif- und/oder Entgeltinformations-Anforderung und gibt diese an die dem SCP 50 zugeordnete Empfangs- und Auswerteeinrichtung 80 weiter. Die Empfangs- und Auswerteeinrichtung 80 empfängt und wertet die erhaltene Tarif- und/oder Entgeltinformations-Anforderung aus und veranlasst in Abhängigkeit von der erhaltenen Tarif- und/oder Entgeltinformations-Anforderung und der darin enthaltenen CBN, dass der SCP 50 die INAP-Nachricht SCI und, falls in der Weitverkehrsvermittlungsstelle 20 ein Kommunikationsdatensatz für das intelligente Netz generiert werden soll, die INAP-Nachricht FCI an die SSF 55sendet. Ferner wird eine ISUP-Nachricht CHGE in Richtung zur Teilnehmer-Vermittlungsstelle 10 gesendet. Die Teilnehmer-Vermittlungsstelle 10 quittiert die erhaltene ISUP-Nachricht CHGE durch Senden einer ISUP-Nachricht CHGEA an die SSF 55. Mit Erhalt der ISUP-Nachricht CHGE kann die Teilnehmer-Vermittlungsstelle 10 die dem rufenden Teilnehmer 15 zu übermittelnde neue Entgeltinformation anlegen. Bei Verbindungen aus dem eigenen Netz geschieht dies z.B. mittels des ISDN-Dienstmerkmals "Advice of Charge" oder mit 16 kHz-Impulsen. Bei Verbindungen aus fremden inländischen Festnetzen geschieht das Übermitteln der Entgeltinformation beispielsweise dadurch, dass nicht die Teilnehmer-Vermittlungsstelle 10, sondern stattdessen eine Netzübergangs-Vermittlungsstelle 10 anhand der erhaltenen ISUP-Nachricht CHGE eine ISUP-Nachricht gemäß AOC'99 mit darin enthaltener Entgeltinformation generiert und diese ISUP-Nachricht in das fremde Netz sendet.

Das Generieren der Tarif- und/oder Entgeltinformations-Anforderung durch die Steuerschaltung 72 des Rufverarbeitungs-Servers 100 ist auf einfache Weise möglich, da der Rufverarbeitungs-Server 100 laufend über alle Konfigurations- und Verbindungszustände des angeschlossenen Call Centers 35 informiert wird. Erfolgt zum Beispiel innerhalb des Call Centers 35 ein Routing der Verbindung zu einem Agenten, der eine höherwertige Dienstleistung erbringt, wird der Rufverarbeitungs-Server 100 zeitgerecht davon informiert. Weiterhin sind in marktüblichen Rufverarbeitungs-Servern z.B. Tabellen vorhanden. In diesen Tabellen kann auch Tarif- und/oder Entgeltinformation abgelegt werden. Anhand der Konfigurations- und Verbindungszustände der Call Center und anhand der abgelegten Tarif- und/oder Entgeltinformation kann dann von der Steuerschaltung 72 des Rufverarbeitungs-Servers 100 die für die jeweilige Verbindung im jeweiligen Verbindungszustand anzulegende Tarif- und/oder Entgeltinformation bestimmt und in die entsprechende Tarif-und/oder Entgeltinformations-Anforderung eingefügt werden.

Alternativ kann die Tarif- und/oder Entgeltinformations-Anforderung mit der darin enthaltenen Tarif- und/oder Entgeltinformation auch durch eine dem Call Center 35 zugeordnete Steuerschaltung 70 (vgl. Fig. 1) erzeugt und zunächst an den Rufverarbeitungs-Server 100 in einem bestimmten Format übermittelt werden. Die Steuerschaltung 72 des Rufverarbeitungs-Servers 100 empfängt die Tarif- und/oder Entgeltinformations-Anforderung, wertet sie aus und übermittelt sie dem Rufverarbeitungs-Server 100. Der weitere Ablauf erfolgt dann, wie oben beschrieben.

Weiterhin ist es möglich, dass eine Steuerschaltung des Call Centers 35 lediglich eine Tarif- und/oder Entgeltinformations-Anforderung ohne eine darin enthaltene Tarif- und/oder Entgeltinformation an den Rufverarbeitungs-Server 100 sendet. Die Steuerschaltung 72 des Rufverarbeitungs-Servers 100 empfängt die erhaltene Tarif-und/oder Entgeltinformations-Anforderung und wertet sie aus. Danach fragt die Steuerschaltung 72 nach einer entsprechenden Tarif- und/oder Entgeltinformation beim Rufverarbeitungs-Server 100 an. Die für die jeweilige Verbindung anzulegende Tarif- und/oder Entgeltinformation ist im Rufverarbeitungs-Server 100 z.B. anhand einer entsprechenden Tabelle hinterlegt. Der Rufverarbeitungs-Server 100 ermittelt die Tarif- und/oder Entgeltinformation und übermittelt sie an die Steuerschaltung 72. Der weitere Ablauf erfolgt dann, wie oben beschrieben.

Für bestimmte Zwecke kann es erforderlich sein, dass der Dienstanbieter des Call Centers 35 auch bepreiste oder unbepreiste Kommunikationsdatensätze für die Verbindung mit dem rufenden Teilnehmer 15 generieren kann. Wenn zum Beispiel das Call Center 35 hierzu nicht in der Lage ist, so kann diese Aufgabe vom Rufverarbeitungs-Server 100 übernommen werden. Dies kann wie folgt geschehen:

Der Rufverarbeitungs-Server 100 erhält laufend Informationen vom SCP 50 über den weiteren Zustand der jeweiligen Verbindung (z.B. "gerufenes Ziel hat Verbindung entgegengenommen", gerufenes Ziel hat ausgelöst", "Anrufer hat ausgelöst" usw.). Diese Verbindungs-Zustandsinformationen werden z.B. zeitgerecht vom SCP 50 an den Rufverarbeitungs-Server 100 übermittelt. Dies ist ein bei einigen marktüblichen Rufverarbeitungs-Servern im Zusammenwirken mit einem SCP bereits realisiertes Verfahren.

Der Rufverarbeitungs-Server 100 gibt diese Verbindungs-Zustandsinformationen nun an die zweite, dem Rufverarbeitungs-Server 100 zugeordnete Steuerschaltung 110 weiter. Die Steuerschaltung 110 versieht die Verbindungs-Zustandsinformationen beispielsweise mit einem Zeitstempel und generiert daraufhin entsprechende Kommunikationsdatensätze. Diese Kommunikationsdatensätze können in unbepreister, aber auch in bepreister Form generiert werden.

Zum Generieren von bepreisten Kommunikationsdatensätzen kann z.B. folgendes Verfahren angewandt werden: Wie oben bereits beschrieben, generiert die Steuerschaltung 72 des Rufverarbeitungs-Servers 100 eine Tarif- und/oder Entgeltinformations-Anforderung und übermittelt diese an den Rufverarbeitungs-Server 100. Die Tarif- und/oder Entgeltinformations-Anforderung enthält die Tarif- und/oder Entgeltinformation zum Beispiel in Form einer CBN. Die Tarif-und/oder Entgeltinformations-Anforderung wird vom RufVerarbeitungs-Server 100 nun nicht nur an den SCP 50 des digitalen Netzes, sondern auch an die zweite Steuerschaltung 110 übermittelt. Anhand der in der Tarif- und/oder Entgeltinformations-Anforderung enthaltenen Tarif- und/oder Entgeltinformation kann dort nun das Bepreisen der Kommunikationsdatensätze erfolgen.

Ein Tarifwechsel während einer bestehenden Verbindung kann mit Unterstützung des Rufverarbeitungs-Servers 100 auch auf andere Weise veranlasst werden.

Der Rufverarbeitungs-Server 100 sendet hierzu eine entsprechende Meldung mit oder ohne einer darin enthaltenen Tarif- und/oder Entgeltinformations-Anforderung an den SCP 50. Die im SCP 50 vorhandene Service-Logik veranlasst daraufhin auf bekannte Weise, dass der Verbindungsabschnitt zwischen der in der Weitverkehrsvermittlungsstelle 20 implementierten SSF 55 und dem Call Center 35 zunächst ausgelöst wird, während der Verbindungsabschnitt zwischen dem rufenden Teilnehmer 15 und SSF 55 aber bestehen bleibt.

War eine Tarif- und/oder Entgeltinformations-Anforderung in der Meldung vorhanden, so gibt der SCP 50 die erhaltene Tarif- und/oder Entgeltinformations-Anforderung an die ihm zugeordnete Empfangs- und Auswerteeinrichtung 80. Die Empfangs- und Auswerteeinrichtung 80 empfängt und wertet die Tarif- und/oder Entgeltinformations-Anforderung aus und übermittelt die in der Tarif- und/oder Entgeltinformations-Anforderung enthaltene CBN an den SCP 50.

Gesteuert durch eine Service-Logik fragt der SCP 50 erneut beim Rufverarbeitungs-Server 100 an, wie die Verbindung weiter zu behandeln ist. Der Rufverarbeitungs-Server 100 ermittelt dann das gleiche Ziel wie vorher und teilt diese Leitweginformation dem SCP 50 mit.

War in der oben genannten Meldung jedoch keine Tarif-und/oder Entgeltinformations-Anforderung enthalten, so wird diese nun von der Steuerschaltung 72 des Rufverarbeitungs-Servers 100 der vorgenannten Leitweginformation zugefügt.

Der SCP 50 empfängt und wertet die erhaltene Leitweginformation aus und übergibt die erhaltene Tarif-und/oder Entgeltinformations-Anforderung der dem SCP 50 zugeordneten Empfangs- und Auswerteeinrichtung 80. Der weitere Ablauf im Digitalnetz zur Übermittlung der Tarif-und/oder Entgeltinformation in Richtung zum rufenden Teilnehmer 15 entspricht dann dem oben bereits beschriebenen Ablauf.

Der SCP 50 veranlasst nun das Senden der INAP-Nachricht SCI und, falls in der Weitverkehrsvermittlungsstelle 20 ein Kommunikationsdatensatz für das intelligente Netz generiert werden soll, der INAP-Nachricht FCI an die SSF 55 und er veranlasst, dass die Verbindung von SSF 55 zum Call Center 35 erneut aufgebaut wird.

Nach Entgegennahme der Verbindung durch das Call Center 35 trifft nun aus Richtung des Call Centers 35 eine ISUP-Nachricht ANM in der SSF 55 ein. Aufgrund der erhaltenen ANM generiert die SSF 55 eine Nachricht CHGE. In die Nachricht CHGE schreibt die SSF 55 die z.B. in der SCI erhaltene CBN ein. Die SSF 55 sendet die Nachricht CHGE in Richtung zur Teilnehmer-Vermittlungsstelle 10. Die Teilnehmer-Vermittlungsstelle 10 quittiert die erhaltene CHGE mit einer CHGEA und sendet diese zur SSF 55 zurück. Falls in der Weitverkehrsvermittlungsstelle ein Kommunikationsdatensatz für das intelligente Netz geschrieben werden soll, so kann dieser nun begonnen werden. Nach Erhalt der CHGE kann die Teilnehmer-Vermittlungstelle 10 die dem rufenden Teilnehmer 15 zu übermittelnde Entgeltinformation anlegen.

Technisch ist bei marktüblichen Call Processing Servern auch ein Verfahren möglich, bei dem vom Call Center 35 eine Auslösung initiiert wird. Dann wird der Verbindungsabschnitt zwischen SSF 55 und dem Call Center 35 ausgelöst, wohingegen der Verbindungsabschnitt zum rufenden Teilnehmer 15 bestehen bleibt. Der SCP 50 wird von der SSF 55 über die Auslösung informiert. Der SCP 50 fragt beim Rufverarbeitungs-Server 100 an, wie die Verbindung weiter zu behandeln ist. Daraufhin sendet der Rufverarbeitungs-Server 100 eine entsprechende Meldung mit oder ohne darin enthaltener Tarif- und/oder Entgeltinformations-Anforderung an den SCP 50. Der weitere Ablauf entspricht dann dem oben bereits beschriebenen Ablauf.

Ferner kann es sinnvoll sein, den rufenden Teilnehmer 15 bei einem Tarifwechsel zunächst mit einer Ansage- und/oder Dialogeinrichtung 90 zu verbinden, bevor der rufende Teilnehmer 15 wieder mit dem ursprünglichen Call Center 35 verbunden wird. Dies kann dadurch geschehen, dass der SCP 50, gesteuert durch dessen Service-Logik, beim Rufverarbeitungs-Server 100 nach der weiteren Verbindungsbehandlung anfragt. Der Rufverarbeitungs-Server 100 gibt als Zielinformation dann zunächst die Adresse der Ansage- und/oder Dialogeinrichtung 90 an den SCP 50. Die weiteren Abläufe erfolgen in Analogie zu den oben beschriebenen Verfahren.

### II. Bestimmung der Tarif- und/oder Entgeltinformation durch das Call Center 35 während einer bestehenden Verbindung ohne Zwischenschaltung des Rufverarbeitungs-Servers 100

### a) unter Anwendung des ISDN-Dienstmerkmals "UUS3"

Angenommen sei, dass bereits eine Verbindung zwischen dem rufenden Teilnehmer 15 und dem Call Center 35 besteht. Nun möchte der Angerufene einen Tarifwechsel während der bestehenden Verbindung veranlassen und den hierbei zu ändernden Tarif und/oder die zu übermittelnde Entgeltinformation bestimmen.

Hierzu wird das ISDN-Dienstmerkmal "User-to-User-Signalling-Service 3 vom SCP 50 beim oder nach erfolgtem Verbindungsaufbau aufgerufen.

Der Aufruf wird vom SCP 50 über das Intelligent Network Application Protocol (INAP) bis zur SSF 55 transportiert. Die SSF 55 setzt den so erhaltenen Aufruf in eine Nachricht des ISDN User Parts (ISUP) um und sendet diese in Richtung zum Call Center 35. Vom Call Center 35 aus erfolgt dann über den gleichen Weg rückwärts die Bestätigung für den Aufruf.

Nun kann während der bestehenden Verbindung von der dem Call Center 35 zugeordneten Steuerschaltung 70 eine User-to-User-Information, welche die Tarif- und/oder Entgelt-Anforderung einschließlich einer CBN beinhaltet, generiert und in einer User-to-User-Information des ISDN User Parts (ISUP) zur SSF 55 und von dort über eine Nachricht des INAP zum SCP 50 gesendet werden.

Der SCP 50 wertet daraufhin diese Informationen aus und sendet die INAP-Nachricht SCI und, falls in der Weitverkehrsvermittlungsstelle 20 ein Kommunikationsdatensatz für das intelligente Netz generiert werden soll, die INAP-Nachricht FCI an die SSF 55. In den Kommunikationsdatensatz wird dann z.B. die in der INAP-Nachricht SCI enthaltene CBN eingeschrieben.

Die SSF 55 sendet weiterhin eine ISUP-Nachricht CHGE in Richtung zur Teilnehmer-Vermittlungsstelle 10. Die Teilnehmer-Vermittlungsstelle 10 quittiert die erhaltene CHGE durch Senden einer ISUP-Nachricht CHGEA an die SSF 55. Weiterhin kann die Teilnehmer-Vermittlungsstelle 10 die dem rufenden Teilnehmer 15 zu übermittelnde neue Entgeltinformation anlegen.

### b) unter Anwendung des ISDN-Dienstmerkmals "UUS1 implizit"

Bei Nutzung des ISDN-Dienstmerkmals "UUS1 implizit" kann ein Tarifwechsel während der Verbindung auch auf andere Art realisiert werden: Zunächst wird in bekannter Weise eine Verbindung zwischen dem rufenden Teilnehmer 15 und dem Call Center 35 hergestellt. Hierbei ruft der SCP 50 das ISDN-Dienstmerkmal "UUS1 implizit" auf, indem er veranlasst, dass in die ISUP-Verbindungsaufbaunachricht ein nicht näher bezeichneter Eintrag in das Informationsfeld "User-to-User-Information" erfolgt. Diese Verbindungsaufbau-Nachricht wird dann von der SSF 55 zum Call Center 35 übermittelt. Dies ist ein Verfahren, welches z.B. im ISDN der Deutschen Telekom AG bereits realisiert ist.

Wird nun vom Call Center 35 ein Tarifwechsel während einer Verbindung angefordert, so generiert die Steuerschaltung 70 des Call Centers 35 eine Tarif- und/oder Entgelt-Anforderung, welche auch die entsprechende CBN enthält. Die Tarif- und/oder Entgelt-Anforderung wird vom Call Center 35 in das Informationsfeld "User-to-User-Information" der Auslösenachricht eingeschrieben. Mit vom Call Center 35 initiiertem Auslösevorgang wird die Auslösenachricht bis zur SSF 55 übermittelt. Die SSF 55 empfängt die Auslösenachricht und übermittelt die darin enthaltene Tarif- und/oder Entgelt-Anforderung über eine INAP-Nachricht an den SCP 50. Die Empfangs- und Auswerteeinrichtung 80 des SCP 50 empfängt und wertet die erhaltene Tarif- und/oder Entgelt-Anforderung aus. Nun veranlasst die Empfangs- und Auswerteeinrichtung 80, dass der Tarifwechsel durchgeführt wird. Dies geschieht wie folgt: Der SCP 50 sendet die INAP-Nachricht SCI und, falls in der Weitverkehrsvermittlungsstelle 20 ein Kommunikationsdatensatz für das intelligente Netz generiert werden soll, die INAP-Nachricht FCI an die SSF 55.

Der SCP 50 veranlasst weiterhin zum Beispiel anhand der in einer Service Logik gespeicherten Verkehrsführungsdaten, dass erneut eine Verbindung zum gleichen Call Center 35 aufgebaut wird. Mit Entgegennahme der erneuten Verbindung durch das Call Center 35 wird dann bei einem über das Zeichengabesystem Nr.7 angeschlossenen Call Center 35 vom Call Center 35 eine ISUP-Nachricht ANM generiert.

Trifft nun aus Richtung des Call Centers 35 eine ISUP-Nachricht ANM in der SSF 55 ein, so wird von der SSF 55 eine CHGE-Nachricht in Richtung zum Ursprung der Verbindung gesendet. Die CHGE-Nachricht enthält die CBN. Die SSF 55 sendet die CHGE-Nachricht zur Teilnehmer-Vermittlungsstelle 10. Die Teilnehmer-Vermittlungsstelle 10 quittiert die erhaltene CHGE-Nachricht durch Senden einer ISUP-Nachricht CHGEA an die SSF 55. Die Erzeugung des in der SSF 55 vorbereiteten Kommunikationsdatensatzes wird begonnen. In diesen Kommunikationsdatensatz wird die z.B. in der SCI enthaltene CBN eingeschrieben. Nach Erhalt der CHGE-NAchricht kann die Teilnehmer-Vermittlungsstelle 10 die zu übermittelnde neue Entgeltinformation dem rufenden Teilnehmer 15 zuführen.

### III. Bestimmung der Tarif- und/oder Entgeltinformation durch das Call Center 35 während eines Verbindungsaufbaus ohne Zwischenschaltung des Rufverarbeitungs-Servers 100

Ein Anrufer baut am Telefon 15 wiederum mit Hilfe des intelligenten Netzes eine Verbindung zum Call Center 35 beispielsweise durch Wahl der entsprechenden Dienstkennzahl auf, wie in Fig. 1 gezeigt. Durch Wahl der Dienstkennzahl des Call Centers 35 wird der SCP 50 des intelligenten Netzes getriggert. Der SCP 50 ermittelt nun die physikalische Zieladresse des Call Centers 35, setzt eine User-to-User-Information mit nicht näher bezeichnetem Inhalt auf und veranlasst dann über die SSF 55 den weiteren Verbindungsaufbau zum Call Center 35. Das Call Center 35 empfängt und wertet die Verbindungsaufbaunachricht aus. Dies ist ein z.B. im ISDN der Deutschen Telekom AG bereits eingeführtes Verfahren.

Nun generiert und sendet die Steuerschaltung 70 des Call Centers 35 eine Tarif- und/oder Entgeltinformations-Anforderung, die eine als CBN codierte Tarifinformation an das Call Center 35 sendet. Das Call Center 35 schreibt die erhaltene Tarif- und/oder Entgeltinformations-Anforderung in eine UUS (User-to-User)-Information und diese wiederum in eine Nachricht des ISDN User Parts ein (z.B. in eine Call Control Nachricht ACM, CPG). Das Call Center 35 sendet die Nachricht rückwärts zur in der Weitverkehrsvermittlungsstelle 20 implementierten SSF 55, die die erhaltene Nachricht auswertet und die erhaltene User-to-User-Information über das Intelligent Network Application Protocol (INAP) an den SCP 50 sendet. Der SCP 50 wertet daraufhin diese Information aus und sendet die INAP-Nachrichten SCI und, falls in der Weitverkehrsvermittlungsstelle 20 ein Kommunikationsdatensatz für das intelligente Netz generiert werden soll, die INAP-Nachricht FCI an die SSF 55. Weiterhin sendet die SSF 55 eine ISUP-Nachricht CHGE in Richtung zur Teilnehmer-Vermittlungsstelle 10. Die Teilnehmer-Vermittlungsstelle 10 quittiert die erhaltene CHGE durch Senden einer ISUP-Nachricht CHGEA an die SSF 55. Trifft nun aus Richtung des Call Centers 35 eine ISUP-Nachricht ANM in der SSF 55 ein, so wird der von der SSF 55 vorbereitete Kommunikationsdatensatz erstellt. In diesen Kommunikationsdatensatz wird die z.B. in der SCI enthaltene CBN eingeschrieben. Die ANM wird von der SSF 55 bis zur Teilnehmer-Vermittlungsstelle 10 weiter gegeben. Spätestens nach Erhalt der ANM kann die Teilnehmer-Vermittlungsstelle 10 nun die dem rufenden Teilnehmer 15 zu übermittelnde Entgeltinformation anlegen.

### IV. Bestimmung der Tarif- und/oder Entgeltinformation durch das Call Center 35 einer weitervermittelten Verbindung mit Hilfe des Rufverarbeitungs-Servers 100

Angenommen sei, dass bereits eine Verbindung zwischen dem rufenden Teilnehmer 15 und dem Call Center 35 besteht, wie in Fig. 2 dargestellt. Diese Verbindung wurde in bekannter Weise mittels Unterstützung des Rufverarbeitungs-Servers 100 hergestellt. Nun möchte das Call Center 35 eine automatische Weitervermittlung (Re-Routing) zu dem dritten Teilnehmer 45 veranlassen und hierbei die Tarifierung und/oder Entgeltinformation für die weitervermittelte Verbindung bestimmen. Dies kann wie folgt geschehen:

Das Call Center 35 löst die Verbindung aus. Daraufhin löst das digitale Netz den Verbindungsabschnitt zwischen der SSF 55 und dem Call Center 35 aus und meldet die Auslösung an den SCP 50; der Verbindungsabschnitt zwischen dem rufenden Teilnehmer 15 und SSF 55 bleibt aber bestehen. Der SCP 50 fragt nun beim Rufverarbeitungs-Server 100 an, wie die Verbindung weiter zu behandeln ist. Der Rufverarbeitungs-Server 100 übermittelt dann eine Leitweginformation ("Weitervermittlungsbefehl"), welche die Adresse des dritten Teilnehmers 45 enthält, an den SCP 50 des dem digitalen Netz zugeordneten intelligenten Netzes. Bis dahin handelt es sich um ein bei einigen marktüblichen Rufverarbeitungs-Servern im Zusammenspiel mit einem SCP bereits bekanntes Verfahren.

Für das Anfordern des vom gerufenen Teilnehmer 35 bestimmten Tarifs und/oder der Entgeltinformation für die weitervermittelte Verbindung generiert die dem Rufverarbeitungs-Server 100 zugeordnete Steuerschaltung 72 eine Tarif- und/oder Entgeltinformations-Anforderung mit einer darin enthaltenen Tarifinformation, die eine CBN darstellt, und sendet diese an den Rufverarbeitungs-Server 100, der den Weitervermittlungsbefehl zusammen mit der Tarif-und/oder Entgeltinformations-Anforderung in einer oder mehreren vorbestimmten Signalisierungs-Nachrichten an den SCP 50 sendet.

Die in einer vorbestimmten Signalisierungs-Nachricht des Weitervermittlungsbefehls enthaltene Tarif- und/oder Entgeltinformations-Anforderung gibt der SCP 50 an die ihm zugeordnete Empfangs- und Auswerteeinrichtung 80 weiter. Die Empfangs- und Auswerteeinrichtung 80 empfängt und wertet die Tarif- und/oder Entgeltinformations-Anforderung aus und übermittelt die darin enthaltene CBN an den SCP 50. Der SCP 50 veranlasst nun das Senden der INAP-Nachricht SCI, und falls in der Weitverkehrsvermittlungsstelle 20 ein Kommunikationsdatensatz für das intelligente Netz generiert werden soll, die INAP-Nachricht FCI an die SSF 55. Weiterhin veranlasst die im SCP 50 implementierte Service Logik auf bekannte Weise, dass die Verbindung zwischen SSF 55 und dem dritten Teilnehmer 45 hergestellt, dass die zu dieser Verbindung gehörende Entgeltinformation nunmehr zum rufenden Teilnehmer 15 übermittelt wird und gegebenenfalls, dass der von der SSF 55 vorbereitete Kommunikationsdatensatz erstellt wird.

### V. Bestimmung der Tarif- und/oder Entgeltinformation durch das Call Center 35 einer weitervermittelten Verbindung ohne Zwischenschaltung des Rufverarbeitungs-Servers 100

Zunächst wird wiederum in bekannter Weise eine Verbindung zwischen dem rufenden Teilnehmer 15 und dem Call Center 35 hergestellt. Hierbei ruft der SCP 50 zum Beispiel das ISDN-Dienstmerkmal "UUS1 impl." auf, indem in die Verbindungsaufbaunachricht ein nicht näher bezeichneter Eintrag in das Informationsfeld "User-to-User-Information" erfolgt. Die Verbindungsaufbaunachricht wird dann über das Intelligent Network Application Protocol (INAP) vom SCP 50 zur SSF 55 transportiert. Die SSF 55 generiert daraus eine Verbindungsaufbaunachricht und sendet diese in Richtung zum Call Center 35. Auf diese Weise erhält das Call Center 35 beim Verbindungsaufbau die User-to-User-Information. Dies ist ein Verfahren, welches z.B. im ISDN der Deutschen Telekom AG bereits realisiert ist.

Wird nun vom Call Center 35 eine automatische Weitervermittlung der Verbindung zum dritten Teilnehmer 45 angefordert, so ist hier z.B. im ISDN der Deutschen Telekom AG bereits folgendes Verfahren eingeführt: Das Call Center 35 schreibt die Rufnummer des dritten Teilnehmers 45 in das Informationsfeld "User-to-User-Information" der Auslösenachricht ein. Beim Auslösevorgang wird der Verbindungsabschnitt zwischen SSF 55 und Call Center 35 ausgelöst, während der Verbindungsabschnitt zwischen dem rufenden Teilnehmer 10 und SSF 55 bestehen bleibt. Mit dem vom Call Center 35 initiierten Auslösevorgang wird die Auslöseinformation (inkl. "User-to-User-Information") über ISDN User Part (ISUP) bis zur SSF 55 und von dort über das Intelligent Network Application Protocol (INAP) bis zum SCP 50 übermittelt. Der SCP 50 veranlasst dann, dass eine automatische Weitervermittlung zum dritten Teilnehmer 45 erfolgt und dass diese weitervermittelte Verbindung vom digitalen Netz zum Beispiel so tarifiert wird, als wäre die Verbindung vom rufenden Teilnehmer 15 direkt zum dritten Teilnehmer 45 aufgebaut worden. Andere Tarifierungen sind ebenfalls möglich.

Soll nun vom Call Center 35 aus die Tarifierung und/oder die Entgeltinformation für die oben beschriebene weitervermittelte Verbindung bestimmt oder mit bestimmt werden, so generiert die Steuerschaltung 70 des Call Centers 35 eine Tarif- und/oder Entgeltinformations-Anforderung, die ferner die entsprechende Tarifinformation in Form einer CBN enthält. Diese Tarif- und/oder Entgeltinformations-Anforderung wird zusammen mit der Rufnummer des dritten Teilnehmers 45 in das Informationsfeld "User-to-User-Information" der Auslösenachricht eingeschrieben. Mit vom Call Center 35 initiiertem Auslösevorgang wird der Inhalt der "User-to-User-Information" wie oben beschrieben bis hin zum SCP 50 übermittelt. Die Empfangs- und Auswerteeinrichtung 80 des SCP 50 empfängt und wertet die erhaltene Tarif- und/oder Entgeltinformations-Anforderung aus. Unter Ansprechen auf die ausgewertete Tarif- und/oder Entgeltinformations-Anforderung veranlasst die Empfangs- und Auswerteeinrichtung 80 des SCP 50, dass der Tarifwechsel im digitalen Netz durchgeführt werden kann. Hierfür legt die im SCP 50 bereits vorhandene Service Logik nun die vom Call Center 35 erhaltene CBN für die Tarifierung der weitervermittelten Verbindung zugrunde. Der SCP 50 veranlasst dann einen Verbindungsaufbau zum dritten Teilnehmer 45, tarifiert aber diese weitervermittelte Verbindung nun nicht mehr anhand einer möglicherweise in der Service Logik des SCP 50 eingetragenen CBN, sondern anhand der vom Call Center 35 erhaltenen CBN.

Alternativ kann, wenn die Empfangs- und Auswerteeinrchtung 80 des SCP 50 die Tarif- und/oder Entgeltinformations-Anforderung empfangen und ausgewertet hat, der SCP 50 vor Aufbau einer Verbindung zum dritten Teilnehmer 45 veranlassen, dass der rufende Teilnehmer 15 mit der Ansage- und/oder Dialogeinrichtung 90 verbunden wird, und dass diese Verbindung besonders tarifiert wird (z.B. Tarif "Entgeltfrei"). Nach Ablauf der Ansage und/oder des Dialoges erhält der SCP 50 eine entsprechende Auslösenachricht von der Ansage- und/oder Dialogeinrichtung 90 oder der SCP 50 bestimmt selbst, z.B. mittels Ablauf eines Timers, dass die Verbindung zur Ansage- und/oder Dialogeinrichtung 90 beendet wird. Anschließend veranlasst der SCP 50, dass die Verbindung zum dritten Teilnehmer 45 automatisch aufgebaut wird und dass diese weitervermittelte Verbindung anhand der vom Call Center erhaltenen CBN tarifiert wird und/oder eine entsprechende Entgeltinformation in Rchtung zum rufenden Teilnehmer 15 übermittelt wird.

## Patentansprüche

1. Verfahren zum Übertragen von Tarif- und/oder Entgeltinformationen, welche wenigstens teilweise von einem gerufenen Teilnehmer (35) bestimmt werden, über ein digitales Netz, mit folgenden Verfahrensschritten:
- Aufbauen einer Verbindung zwischen einem rufenden Teilnehmer (15) und einem gerufenen Teilnehmer (35), die an das digitale Netz angeschaltet sind;
- Erzeugen einer vom gerufenen Teilnehmer bestimmten Tarif- und/oder Entgelt-Anforderung, in die eine individuelle Tarif- und/oder Entgeltinformation eingebunden wird;
- Einbetten der Tarif- und/oder Entgelt-Anforderung in eine User-to-User-Information, UUS-Information in gekürzter Form;
- Übertragen der UUS-Information zu einer dem digitalen Netz zugeordneten Empfangs- und Auswerteeinrichtung (80);
- Auswerten der in der UUS-Information enthaltenen Tarif-und/oder Entgelt-Anforderung;
- in Abhängigkeit von der in der Tarif- und/oder Entgelt-Anforderung enthaltenen individuellen Tarif- und/oder Entgeltinformation wird die Verbindung zwischen dem rufenden und dem gerufenen Teilnehmer tarifiert und/oder die Entgeltinformation zum rufenden Teilnehmer übertragen.

2. Verfahren nach Anspruch 1,
**dadurch gekennzeichnet, dass**
die eine Tarif- und/oder Entgelt-Anforderung enthaltende UUS-Information während des Verbindungsaufbaus zu der Empfangs- und Auswerteeinrichtung des digitalen Netzes übertragen werden kann.

3. Verfahren nach Anspruch 1 oder 2,
**dadurch gekennzeichnet, dass**
die eine Tarif- und/oder Entgelt-Anforderung enthaltende UUS-Information während einer bestehenden Verbindung zu der Empfangs- und Auswerteeinrichtung des digitalen Netzes übertragen werden kann.

4. Verfahren nach Anspruch 3,
**dadurch gekennzeichnet, dass**
der gerufene Teilnehmer eine Auslöseinformation erzeugt, dass die Tarif- und/oder Entgelt-Anforderung in einer in der Auslösenachricht enthaltenen UUS-Information zur Empfangs- und Auswerteeinrichtung übertragen wird, und dass
nach Auslösen der Verbindung zum gerufenen Teilnehmer die Verbindung dorthin erneut aufgebaut wird.

5. Verfahren nach Anspruch 3,
**dadurch gekennzeichnet, dass**
die Tarif- und/oder Entgelt-Anforderung in der UUS-Information gemäß dem ISDN-Dienstemerkmal UUS3 zur Empfangs- und Auswerteeinrichtung übertragen wird.

6. Verfahren nach einem der Ansprüche 1 bis 5,
**dadurch gekennzeichnet, dass**
der gerufene Teilnehmer eine Auslöseinformation erzeugt, dass die Adresse eines anderen Teilnehmers, der mit dem rufenden Teilnehmer verbunden werden soll, und die dazugehörende Tarif- und/oder Entgelt-Anforderung in der in der Auslöseinformation enthaltenen UUS-Information zur Empfangs- und Auswerteeinrichtung (80) übertragen werden, dass
nach Auslösen der Verbindung zum gerufenen Teilnehmer eine Verbindung zum anderen Teilnehmer aufgebaut wird, und dass
in Abhängigkeit von der in der Tarif- und/oder Entgelt-Anforderung enthaltenen individuellen Tarif- und/oder Entgeltinformation die Verbindung zwischen dem rufenden und dem anderen Teilnehmer tarifiert und/oder die entsprechende Entgeltinformation zum rufenden Teilnehmer übertragen wird.

7. Verfahren nach Anspruch 4 oder 6,
**dadurch gekennzeichnet, dass**
vor dem erneuten Aufbau der Verbindung zum gerufenen Teilnehmer oder zum anderen Teilnehmer der rufende Teilnehmer mit einer Ansage- und/oder Dialogeinrichtung (90) verbunden und anschließend wieder von dieser getrennt werden kann.

8. Verfahren nach einem der Ansprüche 1 bis 7,
**dadurch gekennzeichnet, dass**
die Verbindung zwischen dem rufenden und gerufenen Teilnehmer mit Hilfe eines intelligenten Netzes aufgebaut wird, und dass
die in der UUS-Information enthaltene Tarif- und/oder Entgelt-Anforderung im intelligenten Netz ausgewertet wird.

9. Verfahren zum Übertragen von Tarif- und/oder Entgeltinformationen, welche wenigstens teilweise von einem gerufenen Teilnehmer (35) bestimmt werden, über ein digitales Netz, mit folgenden Verfahrensschritten:
- Aufbauen einer Verbindung zwischen einem rufenden Teilnehmer (15) und einem gerufenen Teilnehmer (35), die an das digitale Netz angeschaltet sind, mittels eines Rufverarbeitungs-Servers, der mit einem intelligenten Netz und dem gerufenen Teilnehmer verbunden ist;
- Erzeugen einer vom gerufenen Teilnehmer bestimmten Tarif- und/oder Entgelt-Anforderung, in die eine individuelle Tarif- und/oder Entgeltinformation eingebunden wird;
- Einbetten der Tarif- und/oder Entgelt-Anforderung in eine vorbestimmte Signalisierungs-Nachricht;
- Übertragen der Signalisierungs-Nachricht vom Rufverarbeitungs-Server zu einer dem digitalen Netz zugeordneten Empfangs- und Auswerteeinrichtung (80);
- Auswerten der in der Signalisierungs-Nachricht enthaltenen Tarif- und/oder Entgelt-Anforderung;
- in Abhängigkeit von der in der Tarif- und/oder Entgelt-Anforderung enthaltenen individuellen Tarif- und/oder Entgeltinformation wird die Verbindung zwischen dem rufenden und dem gerufenen Teilnehmer tarifiert und/oder die Entgeltinformation zum rufenden Teilnehmer übertragen.

10. Verfahren nach Anspruch 9,
**dadurch gekennzeichnet, dass**
die Tarif- und/oder Entgelt-Anforderung von dem dem gerufenen Teilnehmer zugeordneten Rufverarbeitungs-Server (100) erzeugt wird, und dass
individuelle Tarif- und/oder Entgeltinformationen im Rufverarbeitungs-Server (100) abgelegt oder vom gerufenen Teilnehmer zum Rufverarbeitungs-Server (100) übertragen werden.

11. Verfahren nach Anspruch 9,
**dadurch gekennzeichnet, dass**
die Tarif- und/oder Entgelt-Anforderung vom gerufenen Teilnehmer erzeugt und zum Rufverarbeitungs-Server (100) übertragen wird, der die Tarif- und/oder Entgelt-Anforderung zur Empfangs- und Auswerteeinrichtung (80) überträgt.

12. Verfahren nach einem der Ansprüche 1 bis 11,
**dadurch gekennzeichnet, dass**
das Format der in der Empfangs- und Auswerteeinrichtung (80) empfangenen und ausgewerteten Tarif- und/oder Entgelt-Anforderung vom digitalen Netz unmittelbar verarbeitet werden kann, oder in ein von dem digitalen Netz verarbeitbares Format umgewandelt wird.

13. Kommunikationssystem zur Übertragung.von individuell festlegbaren Tarif- und/oder Entgeltinformationen über ein digitales Netz, an das mehrere erste Endeinrichtungen (15) angeschlossen sind,
**umfassend**
mehrere an das digitale Netz angeschaltete zweite Endeinrichtungen (35), denen jeweils eine Einrichtung (70) zum individuellen Erzeugen einer Tarif- und/oder Entgelt-Anforderung zugeordnet ist, wobei die zweiten Endeinrichtungen (35) und/oder die jeweiligen Erzeugungseinrichtungen (70) zum Übermitteln der Tarif-und/oder Entgelt-Anforderung in einer UUS -Information ausgebildet sind,
wenigstens eine dem digitalen Netz zugeordnete Tarif-und/oder Entgeltinformation-bestimmende Einrichtung (50, 55), der eine Einrichtung zum Empfangen und Auswerten (80) einer in einer UUS-Information übertragenen Tarif- und/oder Entgelt-Anforderung zugeordnet ist, wobei
die Tarif- und/oder Entgeltinformation-bestimmende Einrichtung (50) in Abhängigkeit von einer in der individuellen Tarif- und/oder Entgelt-Anforderung enthaltenen Tarif- und/oder Entgeltinformation die Tarifierung der Verbindung zwischen einer ersten Endeinrichtung (15) und einer zweiten Endeinrichtung (35) und/oder die Übertragung der Entgeltinformation zur ersten Endeinrichtung (15) veranlassen kann.

14. Kommunikationssystem nach Anspruch 13,
**dadurch gekennzeichnet, dass**
die Tarif- und/oder Entgeltinformation-bestimmende Einrichtung in einer Vermittlungsstelle (10, 20) oder zentralen Einrichtung des digitalen Netzes implementiert oder eine Einrichtung (50, 55) eines intelligenten Netzes ist.

15. Kommunikationssystem nach Anspruch 13 oder 14,
**dadurch gekennzeichnet, dass**
die Einrichtung (70) zum individuellen Erzeugen einer Tarif- und/oder Entgelt-Anforderung zum Einbinden einer Tarif- und/oder Entgeltinformation in eine Auslöseinformation ausgebildet ist, die die ihr zugeordnete zweite Endeinrichtung (35) erzeugt, und dass
das digitale Netz unter Ansprechen auf eine empfangene Auslöseinformation automatisch die zuvor ausgelöste Verbindung zur Verbindungs-auslösenden zweiten Endeinrichtung (35) wieder aufbaut.

16. Kommunikationssystem zur Übertragung von individuell festlegbaren Tarif- und/oder Entgeltinformationen über ein digitales Netz mit ersten (15) und zweiten Endeinrichtungen (35), wobei wenigstens ein Rufverarbeitungs-Server (100) zum Verbinden wenigstens einer zweiten Endeinrichtung (35) mit einem intelligenten Netz implementiert ist, **umfassend**
eine Einrichtung (72) zum Erzeugen einer eine Tarif-und/oder Entgeltinformation enthaltenden individuellen Tarif- und/oder Entgelt-Anforderung, die von einer dazugehörenden zweiten Endeinrichtung (35) festlegbar ist, wobei
der Rufverarbeitungs-Server (100) zum Übermitteln der individuellen Tarif- und/oder Entgelt-Anforderung in einem vorbestimmten Format zu wenigstens einer dem intelligenten Netz zugeordneten Tarif- und/oder Entgeltinformation-bestimmenden Einrichtung (50, 55), der eine Einrichtung zum Empfangen und Auswerten (80) einer Tarif- und/oder Entgelt-Anforderung zugeordnet ist, ausgebildet ist, wobei
die Tarif- und/oder Entgeltinformation-bestimmende Einrichtung (50) in Abhängigkeit von einer in der individuellen Tarif- und/oder Entgelt-Anforderung enthaltenen Tarif- und/oder Entgeltinformation die Tarifierung der Verbindung zwischen einer ersten (15) und einer zweiten Endeinrichtung (35) und/oder die Übertragung der Entgeltinformation zur ersten Endeinrichtung (15) veranlassen kann.

17. Kommunikationssystem nach Anspruch 16,
**dadurch gekennzeichnet, dass**
die Einrichtung (72) zum Erzeugen einer eine Tarif-und/oder Entgeltinformation enthaltende Tarif- und/oder Entgelt-Anforderung dem Rufverarbeitungs-Server (100) zugeordnet ist, dass
der Rufverarbeitungs-Server (100) einen Speicher zum Ablegen von Tarif- und/oder Entgeltinformationen einer oder mehrerer zweiter Endeinrichtung (35) zum Einbinden in eine entsprechende Tarif- und/oder Entgelt-Anforderung aufweist, und dass
diese Tarif- und/oder Entgeltinformationen aktualisierbar sind.

18. Kommunikationssystem nach Anspruch 16 oder 17,
**dadurch gekennzeichnet, dass**
dem Rufverarbeitungs-Server (100) eine Einrichtung (110) zum Generieren von bepreisten und/oder unbepreisten Kommunikationsdatensätzen zugeordnet ist

19. Kommunikationssystem nach einem der Ansprüche 13 bis 18,
**dadurch gekennzeichnet, dass**
die Empfangs- und Auswerteeinrichtung (80) eine Einrichtung zum Umsetzen eines nicht Netz-konformen Formats einer in der Tarif- und/oder Entgelt-Anforderung empfangenen Tarif- und/oder Entgeltinformation in ein vom digitalen Netz verarbeitbares Format aufweist.

## Claims

1. Method for transmitting metering and/or payment information through a digital network, said information being determined at least in part by a called subscriber (35), with the following process steps:
- setup of a connection between a calling subscriber (15) and a called subscriber (35) who are connected to the digital network;
- creation of a metering and/or payment request determined by the called subscriber, in which request is incorporated individual metering and/or payment information;
- embedding of the metering and/or payment request in a user-to-user information element, abbreviated as UUS information ;
- transmission of the UUS information to a receiving and analysis unit (80) associated with the digital network;
- analysis of the metering and/or payment request contained in the UUS information; ..
- the connection between the calling and called subscriber is metered, and/or the payment information is transmitted to the calling subscriber, as a function of the individual metering and/or payment information contained in the metering and/or payment request.

2. Method according to claim 1, **characterized in that**
the UUS information containing a metering and/or payment request can be transmitted to the receiving and analysis unit of the digital network during connection setup.

3. Method according to claim 1 or 2, **characterized in that**
the UUS information containing a metering and/or payment request can be transmitted to the receiving and analysis unit of the digital network during an existing connection.

4. Method according to claim 3, **characterized in that**
the called subscriber creates a release information element,
**in that** the metering and/or payment request is transmitted to the receiving and analysis unit in a UUS information element contained in the release message,
and **in that** after release of the connection to the called subscriber the connection thereto is set up again.

5. Method according to claim 3, **characterized in that**
the metering and/or payment request in the UUS information element is transmitted to the receiving and analysis unit according to the ISDN UUS3 service feature.

6. Method according to any one of claims 1 through 5, **characterized in that**
the called subscriber creates release information,
**in that** the address of a different subscriber who is to be connected to the calling subscriber and the associated metering and/or payment request are transmitted to the receiving and analysis unit (80) in the UUS information element contained in the release information,
and **in that** after release of the connection to the called subscriber, a connection to the different subscriber is set up,
and **in that** the connection between the calling subscriber and the different subscriber is metered, and/or the payment information is transmitted to the calling subscriber, as a function of the individual metering and/or payment information contained in the metering and/or payment request.

7. Method according to claim 4 or 6, **characterized in that**
prior to the renewed setup of the connection to the called subscriber or to the different subscriber, the calling subscriber can be connected to an announcement and/or interactive device (90) and can subsequently be disconnected therefrom.

8. Method according to any one of claims 1 through 7, **characterized in that**
the connection between the calling and called subscriber is set up with the aid of an intelligent network,
and **in that** the metering and/or payment request contained in the UUS information is analyzed in the intelligent network.

9. Method for transmitting metering and/or payment information through a digital network, said information being determined at least in part by a called subscriber (35), with the following process steps:
- setup of a connection between a calling subscriber (15) and a called subscriber (35) who are connected to the digital network, said setup being accomplished by means of a call processing server connected to an intelligent network and the called subscriber;
- creation of a metering and/or payment request determined by the called subscriber, in which request is incorporated an individual metering and/or payment information element;
- embedding of the metering and/or payment request in a predetermined signaling message;
- transmission of the signaling message from the call processing server to a receiving and analysis unit (80) associated with the digital network;
- analysis of the metering and/or payment request contained in the signaling message;
- the connection between the calling and called subscriber is metered, and/or the payment information is transmitted to the calling subscriber, as a function of the individual metering and/or payment information contained in the metering and/or payment request.

10. Method according to claim 9, **characterized in that**
the metering and/or payment request is generated by the call processing server (100) associated with the called subscriber,
and **in that** individual metering and/or payment information is stored in the call processing server (100) or is transmitted from the called subscriber to the call processing server (100).

11. Method according to claim 10, **characterized in that**
the metering and/or payment request is generated by the called subscriber and is transmitted to the call processing server (100), and said server transmits the metering and/or payment request to the receiving and analysis unit (80).

12. Method according to one of claims 1 through 11, **characterized in that**
the format of the metering and/or payment request received and analyzed by the receiving and analysis unit (80) can be directly processed by the digital network or is transformed into a format that can be processed by the digital network.

13. Communications system for transmission of individually determinable metering and/or payment information over a digital network to which multiple first terminal devices (15) are connected, **comprising**
multiple second terminal devices (35) connected to the digital network, each said second terminal device (35) having associated with it a device (70) for individual generation of a metering and/or payment request,
the second terminal devices (35) and/or the respective generating devices (70) being designed to transmit the metering and/or payment request in a UUS information element,
and also comprising at least one device (50, 55) for determining metering and/or payment information associated with the digital network, with which device is associated a device (80) for receiving and analyzing a metering and/or payment request transmitted in a UUS information,
wherein the device (50) for determining metering and/or payment information can initiate metering of the connection between a first terminal device (15) and a second terminal device (35) and/or the transmission of payment information to the first terminal device (15) as a function of the metering and/or payment information contained in an individual metering and/or payment request.

14. Communications system according to claim 13, **characterized in that**
the device for determining metering and/or payment information is implemented in an exchange (10, 20) or central system of the digital network or is a device (50, 55) of an intelligent network.

15. Communications system according to claim 13 or 14, **characterized in that**
the device (70) for individually generating a metering and/or payment request is designed to incorporate metering and/or payment information in a release information element generated by the second terminal device (35) associated therewith,
and **in that** the digital network, in response to a received release information element, automatically reestablishes the previously released connection to the connection-releasing second terminal device (35).

16. Communications system for transmission of individually determinable metering and/or payment information over a digital network having first terminal devices (15) and second terminal devices (35), at least one call processing server (100) being implemented to connect at least one second terminal device (35) to an intelligent network, **comprising**
a device (72) for generation of an individual metering and/or payment request containing metering and/or payment information, which request can be determined by an associated second terminal device (35),
wherein the call processing server (100) is designed to transmit the individual metering and/or payment request in a predefined format to at least one device (50, 55) for determining metering and/or payment information associated with the intelligent network, with which device is associated a device (80) for receiving and analyzing a metering and/or payment request,
wherein the device (50) for determining metering and/or payment information can initiate metering of the connection between a first terminal device (15) and a second terminal device (35) and/or the transmission of payment information to the first terminal device (15) as a function of the metering and/or payment information contained in an individual metering and/or payment request.

17. Method according to claim 16, **characterized in that**
the device (72) for generation of a metering and/or payment request containing metering and/or payment information is associated with the call processing server (100),
**in that** the call processing server (100) has a memory for storing metering and/or payment information of one or more second terminal devices (35) for incorporation in a corresponding metering and/or payment request, and
**in that** this metering and/or payment information can be updated.

18. Communications system according to claim 16 or 17, **characterized in that** the call processing server (100) has associated with it a device (110) for generating priced or unpriced communication data records.

19. Communications system according to any one of claims 13 through 18, **characterized in that** the receiving and analysis unit (80) has a device for converting a non-network-conforming format of a metering and/or payment information element received in a metering and/or payment request into a format that can be processed by the digital network.

## Revendications

1. Procédé destiné à la transmission d'informations de tarification et/ou de rémunération, un abonné appelé (35) déterminant au moins en partie lesdites informations, via un réseau numérique, doté des étapes de procédé suivantes :
- établissement d'une communication entre un abonné appelant (15) et un abonné appelé (35) qui sont connectés au réseau numérique ;
- création d'une demande de tarification et/ou de rémunération déterminée par l'abonné appelé, dans laquelle est intégrée une information individuelle de tarification et/ou de rémunération ;
- inclusion de la demande de tarification et/ou de rémunération dans une information User-to-User, en forme abrégée information UUS ;
- transmission de l'information UUS à un dispositif de réception et d'analyse (80) affecté au réseau numérique ;
- analyse de la demande de tarification et/ou de rémunération figurant dans l'information UUS ;
- en fonction de l'information individuelle de tarification et/ou de rémunération figurant dans la demande de tarification et/ou de rémunération, la communication entre l'abonné appelant et l'appelé est tarifiée et/ou l'information de rémunération transmise à l'abonné appelant.

2. Procédé selon la revendication 1,
**caractérisé en ce que**
l'information UUS comportant une demande de tarification et/ou de rémunération peut être transmise pendant l'établissement de la communication au dispositif de réception et d'analyse du réseau numérique.

3. Procédé selon les revendications 1 ou 2,
**caractérisé en ce que**
l'information UUS comportant une demande de tarification et/ou de rémunération peut être transmise pendant une communication en cours au dispositif de réception et d'analyse du réseau numérique.

4. Procédé selon la revendication 3,
**caractérisé en ce que**
l'abonné appelé crée une information de déclenchement,
**en ce que** la demande de tarification et/ou de rémunération est transmise au dispositif de réception et d'analyse dans une information UUS figurant dans le message de déclenchement, et
**en ce que,** après le déclenchement de la communication à destination de l'abonné appelé, celle-ci y est de nouveau établie.

5. Procédé selon la revendication 3,
**caractérisé en ce que**
la demande de tarification et/ou de rémunération dans l'information UUS est transmise au dispositif de réception et d'analyse conformément aux caractéristiques de service RNIS UUS3.

6. Procédé selon l'une des revendications 1 à 5,
**caractérisé en ce que**
l'abonné appelé crée une information de déclenchement,
**en ce que** l'adresse d'un autre abonné, qui doit être mis en communication avec l'abonné appelant et la demande de tarification et/ou de rémunération correspondante dans l'information UUS figurant dans l'information de déclenchement sont transmises au dispositif de réception et d'analyse (80),
**en ce que,** après le déclenchement de la communication à destination de l'abonné appelé, une communication est établie à destination de l'autre abonné **et en ce qu**'en fonction de l'information individuelle de tarification et/ou de rémunération figurant dans la demande de tarification et/ou de rémunération, la communication entre l'abonné appelant et l'autre abonné est tarifiée et/ou l'information de rémunération correspondante transmise à l'abonné appelant.

7. Procédé selon les revendications 4 ou 6,
**caractérisé en ce qu'**avant le nouvel établissement de la communication à destination de l'abonné appelé ou de l'autre abonné, l'abonné appelant est mis en communication avec un dispositif de dialogue et/ou d'annonce (90) et qu'il peut ensuite être déconnecté dudit dispositif.

8. Procédé selon l'une des revendications 1 à 7,
**caractérisé en ce que**
la communication entre l'abonné appelant et l'abonné appelé est établie à l'aide d'un réseau intelligent et
**en ce que** la demande de tarification et/ou de rémunération figurant dans l'information UUS est analysée dans le réseau intelligent.

9. Procédé destiné à la transmission d'informations de tarification et/ou de rémunération, un abonné appelé (35) déterminant au moins en partie lesdites informations, via un réseau numérique, doté des étapes de procédé suivantes :
- établissement d'une communication entre un abonné appelant (15) et un abonné appelé (35) qui sont connectés au réseau numérique, au moyen d'un serveur de traitement des appels qui est connecté avec un réseau intelligent et l'abonné appelé ;
- création d'une demande de tarification et/ou de rémunération déterminée par l'abonné appelé, dans laquelle est intégrée une information individuelle de tarification et/ou de rémunération ;
- inclusion de la demande de tarification et/ou de rémunération dans un message de signalisation prédéfini ;
- transmission du message de signalisation du serveur de traitement des appels à un dispositif de réception et d'analyse (80) affecté au réseau numérique ;
- analyse de la demande de tarification et/ou de rémunération figurant dans le message de signalisation ;
- en fonction de l'information individuelle de tarification et/ou de rémunération figurant dans la demande de tarification et/ou de rémunération, la communication entre l'abonné appelant et l'abonné appelé est tarifiée et/ou l'information de rémunération transmise à l'abonné appelant.

10. Procédé selon la revendication 9,
**caractérisé en ce que**
la demande de tarification et/ou de rémunération est créée par le serveur de traitement des appels (100) affecté à l'abonné appelé et
**en ce que** les informations individuelles de tarification et/ou de rémunération sont déposées dans le serveur de traitement des appels (100) ou transmises par l'abonné appelé audit serveur de traitement des appels (100).

11. Procédé selon la revendication 9,
**caractérisé en ce que**
la demande de tarification et/ou de rémunération est créée par l'abonné appelé et transmise au serveur de traitement des appels (100) qui transfère ladite demande de tarification et/ou de rémunération au dispositif de réception et d'analyse (80).

12. Procédé selon l'une des revendications 1 à 11,
**caractérisé en ce que**
le format de la demande de tarification et/ou de rémunération reçue et évaluée dans le dispositif de réception et d'analyse (80) peut être traité immédiatement par le réseau numérique ou converti en un format traitable par ledit réseau numérique.

13. Système de communication destiné à la transmission d'informations de tarification et/ou de rémunération définissables individuellement via un réseau numérique auquel sont connectés plusieurs premiers dispositifs finaux (15),
comprenant
plusieurs seconds dispositifs finaux (35) connectés au réseau numérique, à chacun desquels est affecté un dispositif (70) destiné à la création individuelle d'une demande de tarification et/ou de rémunération, les seconds dispositifs finaux (35) et/ou les dispositifs de création (70) respectifs étant constitués afin de transférer la demande de tarification et/ou de rémunération dans une information UUS,
au moins un dispositif (50, 55) affecté au réseau numérique déterminant l'information de tarification et/ou de rémunération et auquel est affecté un dispositif de réception et d'analyse (80) d'une demande de tarification et/ou de rémunération transmise dans une information UUS, dans lequel
le dispositif (50) déterminant l'information de tarification et/ou de rémunération peut, en fonction d'une information de tarification et/ou de rémunération figurant dans la demande individuelle de tarification et/ou de rémunération, ordonner la tarification de la communication entre un premier (15) et un second dispositif final (35) et/ou la transmission de l'information de rémunération au premier dispositif final (15).

14. Système de communication selon la revendication 13,
**caractérisé en ce que**
le dispositif déterminant l'information de tarification et/ou de rémunération est implémenté dans un central téléphonique (10, 20) ou un dispositif central du réseau numérique, ou représente un dispositif (50, 55) d'un réseau intelligent.

15. Système de communication selon les revendications 13 ou 14,
**caractérisé en ce que**
le dispositif (70) destiné à la création individuelle d'une demande de tarification et/ou de rémunération est constitué afin d'intégrer une information de tarification et/ou de rémunération dans une information de déclenchement que le deuxième dispositif (35) affecté à celui-ci crée et
**en ce que** le réseau numérique rétablit automatiquement la communication déclenchée auparavant vers le deuxième dispositif final déclencheur de la communication (35), en réaction à une information de déclenchement reçue.

16. Système de communication destiné à la transmission d'informations de tarification et/ou de rémunération définissables individuellement via un réseau numérique avec premiers (15) et seconds dispositifs finaux (35), dans lesquels au moins un serveur de traitement des appels (100) est implémenté afin de connecter au moins un second dispositif final (35) avec un réseau intelligent, comprenant
un dispositif (72) destiné à la création individuelle d'une demande de tarification et/ou de rémunération comportant une information de tarification et/ou de rémunération, ladite demande étant définissable par un second dispositif final (35) qui y est affecté,
le serveur de traitement des appels (100) étant configuré afin de transmettre la demande individuelle de tarification et/ou de rémunération dans un format prédéfini vers au moins un dispositif (50, 55) affecté au réseau intelligent et déterminant l'information de tarification et/ou de rémunération, auquel dispositif est affecté un dispositif destiné à la réception et à l'analyse (80) d'une demande de tarification et/ou de rémunération, dans lequel
le dispositif déterminant l'information de tarification et/ou de rémunération (50) peut déclencher, en fonction d'une information de tarification et/ou de rémunération figurant dans la demande individuelle de tarification et/ou de rémunération, la tarification de la communication entre un premier (15) et un second dispositif final (35) et/ou la transmission de l'information de rémunération au premier dispositif final (15).

17. Système de communication selon la revendication 16,
**caractérisé en ce que**
le dispositif (72) destiné à la création d'une information de tarification et/ou de rémunération figurant dans la demande individuelle de tarification et/ou de rémunération est affecté au serveur de traitement des appels (100),
**en ce que** le serveur de traitement des appels (100) présente une mémoire destinée au stockage d'informations de tarification et/ou de rémunération d'un ou plusieurs deuxièmes dispositifs finaux (35) afin de les intégrer dans une demande correspondante de tarification et/ou de rémunération, et
**en ce que** ces informations de tarification et/ou de rémunération sont actualisables.

18. Système de communication selon les revendications 16 ou 17,
**caractérisé en ce qu'**un dispositif (110) est affecté au serveur de traitement des appels (100) afin de générer des enregistrements de communication payants et/ou gratuits.

19. Système de communication selon l'une des revendications 13 à 18,
**caractérisé en ce que**
le dispositif de réception et d'analyse (80) présente un dispositif afin de convertir le format non conforme au réseau d'une information de tarification et/ou de rémunération reçue dans la demande de tarification et/ou de rémunération en un format traitable par le réseau numérique.
